# FASCICULE DE BREVET EUROPEEN

(11) **EP 0 615 681 B1**
(45) Date de publication et mention de la délivrance du brevet: **08.12.1999**
(21) Numéro de dépôt: 94440018.3
(22) Date de dépôt: 17.03.1994
(51) Int. Cl.: A01B 49/06, A01B 63/32, A01B 59/042, A01B 33/08

(54) **Machine agricole de travail du sol de grande largeur s'adaptant mieux au relief du sol**
Landwirtschaftliche Bodenbearbeitungsmaschine mit grosser Breite, die sich besser an die Bodenunebenheit anpasst
Agricultural soil working machine with a large width, which easily adapts to the unevenness of the soil

(30) Priorité: 19.03.1993 FR 9303357
(43) Date de publication de la demande: 21.09.1994
(73) Titulaire: KUHN S.A., F-67700 Saverne (FR)
(72) Inventeur: Oberle, Edmond, F-67700 Haegen (FR); Schott, Thierry, F-67350 La Walck (FR)

(56) Documents cités:
- EP-A- 0 268 163
- EP-A- 0 287 897
- EP-A- 0 337 534
- EP-A- 0 405 377
- WO-A-88/09113
- DE-U- 9 213 091
- GB-A- 866 151
- US-A- 4 191 262

## Description

La présente invention concerne une machine agricole de travail du sol comportant les caratéristiques du préambule de la revendication 1. Une telle machine est connue par DE-U-9213091.7.

Il est également connu dans l'état de la technique une herse rotative de grande largeur (EP 0 337 534). Celle-ci comporte un châssis lié à l'attelage trois points frontal du tracteur et supportant la trémie d'un semoir. De part et d'autre du châssis s'étend une partie frontale de herse rotative liée audit châssis au moyen d'un bras pivotant autour d'axes dirigés parallèlement à la direction de travail. De ce fait, chaque partie frontale de herse rotative peut s'adapter, durant le travail, au relief du sol par pivotement autour desdits axes. Chaque partie frontale de cette herse rotative connue comporte successivement une poutre support contenant les outils de travail du sol, un rouleau arrière fixé de manière réglable en hauteur à ladite poutre support, et un dispositif d'implantation des graines dans le sol fixé de manière réglable en hauteur à la poutre support et au rouleau. Au travail, la poutre support, le rouleau et le dispositif d'implantation se déplacent en hauteur ensemble. La profondeur de travail des outils de travail du sol est donnée par le rouleau arrière qui roule sur le sol, tandis que l'angle de chaque partie frontale de herse rotative par rapport au sol est donné par la bielle supérieure de l'attelage frontal trois points du tracteur. Les deux parties frontales de cette herse rotative connue travaillent ainsi la terre de part et d'autre du tracteur. La bande de terre centrale, sur laquelle roule le tracteur est, quant à elle, travaillée par la partie arrière de cette herse connue. Cette partie arrière est liée à l'attelage trois points arrière du tracteur et porte un semoir correspondant.

Avantageusement, cette herse rotative connue a une grande largeur de travail et autorise le pivotement de chaque partie frontale autour d'un axe dirigé vers l'avant.

Toutefois, cette herse rotative connue présente des inconvénients.

En effet, vu que cette herse rotative connue est en trois parties, elle est d'une manoeuvrabilité relativement complexe.

Etant donné que les parties avant de cette herse rotative connue sont décalées suivant la direction de travail par rapport à la partie arrière, la bande de terre à travailler risque d'être incomplètement travaillée dans les courbes.

Le but de la présente invention est de créer une machine agricole de travail du sol ne comportant pas les inconvénients ci-dessus.

A cet effet, la présente machine agricole de travail du sol est caractérisée par les caratéristiques de la partie cararactérisante de la revendication

Compte tenu du fait que les groupes d'outils de travail du sol sont au moins sensiblement jointifs, la bande de terre à travailler ne risque pas d'être incomplètement travaillée dans les courbes.

De plus, vu que la machine agricole de travail du sol selon l'invention s'étend entièrement à l'arrière du véhicule moteur, elle est relativement facile à manoeuvrer.

Etant donné que chaque groupe d'outils de travail du sol comporte au moins un élément roulant avant, au moins un élément roulant arrière et une structure d'attelage qui est liée uniquement aux bras inférieurs de l'attelage arrière au moyen de chapes oscillantes, chaque groupe d'outils de travail du sol s'adapte aisément au relief du sol.

Selon une autre caractéristique de l'invention, il est prévu que chaque dispositif de liaison avant comporte au moins un bras avant guidant ledit élément roulant avant et que chaque dispositif de liaison arrière comporte au moins un bras arrière guidant ledit élément roulant arrière.

Dans une première réalisation, chaque bras avant peut être lié à son extrémité arrière à la poutre support correspondante au moyen d'une articulation d'axe de pivotement au moins sensiblement parallèle à l'axe de roulement dudit élément roulant avant et chaque bras arrière peut être lié à son extrémité avant à la poutre support correspondante au moyen d'une articulation d'axe de pivotement au moins sensiblement parallèle à l'axe de roulement dudit élément roulant arrière.

Dans une deuxième réalisation, différente de la précédente, il est prévu que les dispositifs de liaison comportent une structure de guidage rigide qui comprend lesdits bras et qui est liée à la structure d'attelage au moyen de la structure de liaison. Chaque dispositif de liaison comporte en sus des pièces de guidage liant la poutre support à ladite structure de guidage, de sorte à autoriser, au travail, un déplacement en hauteur de la poutre support par rapport à la structure de guidage et aux éléments roulants.

Dans cette deuxième réalisation, une solution intéressante est obtenue lorsque les pièces de guidage comportent des montants guidés par des éléments de guidage.

Les montants peuvent, dans ce cas, être fixés à la poutre support et les éléments de guidage liés rigidement à la structure de guidage.

Dans cette deuxième réalisation, une autre solution intéressante est obtenue lorsque les pièces de guidage comportent deux quadrilatères déformables vers le haut qui s'étendent au moins sensiblement perpendiculairement à la poutre support.

Dans ce cas, il est avantageux que chaque quadrilatère déformable soit au moins sensiblement un parallélogramme lié, à sa partie frontale, à la structure de guidage et, à sa partie arrière, à la poutre support.

De plus, il est prévu que les dispositifs de liaison de chaque groupe d'outils de travail du sol comportent au moins un dispositif de réglage de la profondeur de travail autorisant, au travail, un déplacement en hauteur de la poutre support par rapport aux éléments roulants tout en limitant vers le bas le déplacement de la poutre support par rapport auxdits éléments roulants.

Selon une autre caractéristique très intéressante de l'invention, il est également prévu que cette machine agricole de travail du sol comporte au moins une trémie avec un dispositif de distribution des graines, fixée à la structure d'attelage et deux dispositifs d'implantation des graines dans le sol, chacun lié à un groupe d'outils de travail du sol.

Chaque dispositif d'implantation des graines dans le sol peut être avantageusement lié rigidement au dispositif de liaison arrière du groupe d'outils de travail du sol correspondant. De ce fait, les moyens liant le dispositif d'implantation au dispositif de liaison arrière ont un encombrement réduit et les déplacements en hauteur de la poutre support, au travail, ne modifient pas ou très peu la position dudit dispositif d'implantation par rapport au sol.

Notamment dans la première réalisation où les bras sont liés à la poutre support au moyen d'articulations permettant de modifier la profondeur de travail, chaque dispositif d'implantation peut être lié au dispositif de liaison arrière au moyen d'une structure réglable en hauteur. Grâce à un tel agencement, la position du dispositif d'implantation par rapport au sol est susceptible d'être modifiée en fonction de la profondeur de travail choisie.

De plus, chaque structure réglable en hauteur comporte au moins un organe réglable permettant d'ajuster la position angulaire du dispositif d'implantation par rapport à la surface du sol.

Préférentiellement, la machine agricole de travail du sol selon l'invention comporte deux trémies, chacune liée à la structure d'attelage, en vue de dessus, au moins sensiblement dans la partie médiane du groupe d'outils de travail du sol correspondant.

Par ailleurs, l'élément roulant arrière est un rouleau arrière et le dispositif de liaison arrière comporte deux bras arrière entre lesquels est guidé ledit rouleau arrière. Ce dispositif de liaison arrière comporte en sus au moins un longeron arrière s'étendant entre lesdits bras arrière et auquel longeron arrière est fixé le dispositif d'implantation.

Du reste, il est prévu que le dispositif de liaison arrière comporte, derrière le longeron arrière, un longeron support s'étendant également entre lesdits bras arrière, ainsi que des organes rigidifiants implantés entre le longeron arrière et le longeron support.

Comme pour l'élément roulant arrière, il est intéressant que l'élément roulant avant soit un rouleau et que le dispositif de liaison avant comporte deux bras avant, entre lesquels est guidé ledit rouleau avant.

Selon une autre caractéristique supplémentaire de l'invention, il est aussi prévu que la machine agricole de travail du sol comporte deux roues, chacune implantée derrière un élément roulant arrière correspondant et liée à la structure d'attelage au moyen d'un dispositif de guidage correspondant. Le dispositif de guidage autorise un pivotement de la roue respective autour d'un axe de pivotement dirigé vers le haut et permet, lorsque cela est souhaité, un déplacement en hauteur de la roue par rapport à ladite structure d'attelage.

A cet effet, chaque dispositif de guidage comporte :
- une partie de guidage fixée de manière réglable à la structure d'attelage suivant une direction dirigée vers l'avant, de sorte à pouvoir rapprocher ou éloigner la roue de la structure d'attelage ;
- un bras de guidage lié à ladite partie de guidage au moyen d'une articulation cylindrique d'axe de pivotement au moins sensiblement horizontal et perpendiculaire audit bras de guidage ;
- un organe de manoeuvre implanté entre la partie de guidage et le bras de guidage et
- un bras de roue guidant la roue et lié au bras de guidage au moyen dudit axe de pivotement dirigé vers le haut.

Selon une caractéristique supplémentaire très avantageuse de l'invention, la machine agricole de travail du sol comporte aussi des organes de guidage implantés entre chaque groupe d'outils de travail du sol et la structure d'attelage, de sorte à encaisser au moins une partie du moment des efforts produits par l'action du sol sur le groupe d'outils de travail du sol, par rapport à ladite structure de liaison lors de l'avancement de la machine agricole de travail du sol au travail.

Certains au moins de ces organes de guidage sont implantés, vus de dessus, au moins sensiblement entre les deux structures de liaison.

Les organes de guidage comportent au moins un montant de guidage destiné à coulisser entre deux butées respectives, décalées l'une par rapport à l'autre suivant la direction de travail.

Une solution avantageuse est obtenue lorsque chaque montant de guidage est fixé à son extrémité inférieure à un groupe d'outils de travail du sol et que les deux butées correspondantes sont solidaires de la structure d'attelage.

D'après une autre caractéristique de l'invention, il est par ailleurs prévu que la structure d'attelage comporte au moins une poutre avant et au moins une poutre arrière fixées entre elles et auxquelles sont liés les groupes d'outils de travail du sol au moyen des structures de liaison. Cette structure d'attelage comporte en sus deux poutrelles, chacune fixée entre la poutre avant et la poutre arrière dans le voisinage de la structure de liaison correspondante, ainsi qu'au moins une poutre supérieure fixée à la poutre avant et à la poutre arrière, de sorte à s'étendre au-dessus de ladite poutre avant. Une telle configuration est particulièrement avantageuse lorsque la structure d'attelage de la machine agricole de travail du sol est destinée à porter un semoir.

Des applications particulièrement intéressantes peuvent être obtenues dans le domaine des herses rotatives.

D'autres caractéristiques de l'invention apparaissent dans la description suivante de trois exemples non limitatifs de réalisation de l'invention faite en référence au dessin annexé sur lequel :
- la figure 1 représente une vue de dessus d'une machine agricole de travail du sol selon l'invention liée à un tracteur agricole et placée dans une position haute de bout de champ ;
- la figure 2 représente une vue de dessus agrandie d'une moitié de ladite machine agricole de travail du sol ;
- la figure 3 représente une vue arrière de la machine agricole de travail du sol dans une position haute de bout de champ ;
- la figure 4 représente une vue latérale de la machine agricole de travail du sol dans sa position de travail ;
- la figure 5 représente une vue de dessus d'un groupe d'outils de travail du sol d'un autre exemple de réalisation d'une machine agricole de travail du sol selon l'invention ;
- la figure 6 représente une vue arrière du groupe d'outils de travail du sol de la figure 5 ;
- la figure 7 représente une vue latérale du groupe d'outils de travail du sol de la figure 5, muni d'un dispositif d'implantation des graines dans le sol ;
- la figure 8 représente une vue de dessus d'un groupe d'outils de travail du sol d'un exemple supplémentaire de réalisation d'une machine agricole de travail du sol selon l'invention ;
- la figure 9 représente une vue arrière du groupe d'outils de travail du sol de la figure 8 ;
- la figure 10 représente une vue latérale du groupe d'outils de travail du sol de la figure 8, muni d'un dispositif d'implantation des graines dans le sol.

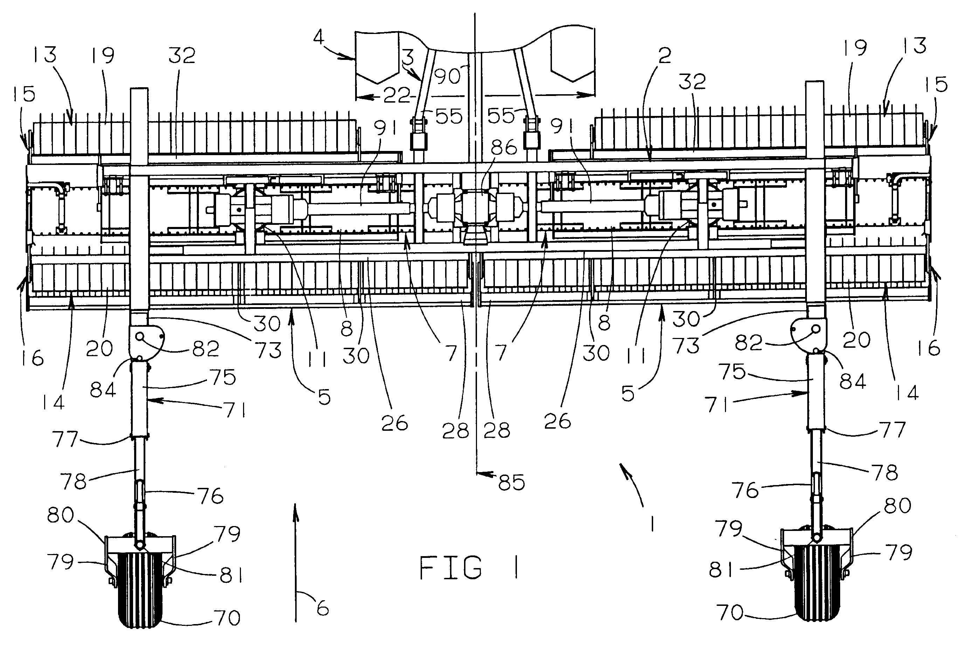

Sur les figures 1 à 4 apparaît une herse rotative (1) selon l'invention.

Celle-ci comporte une structure d'attelage (2) destinée à être liée à l'attelage arrière (3) d'un tracteur agricole (4) et deux groupes d'outils de travail du sol (5). Les deux groupes d'outils de travail du sol (5) s'étendent transversalement à la direction de travail (6), au moins sensiblement dans le prolongement l'un de l'autre et bout à bout.

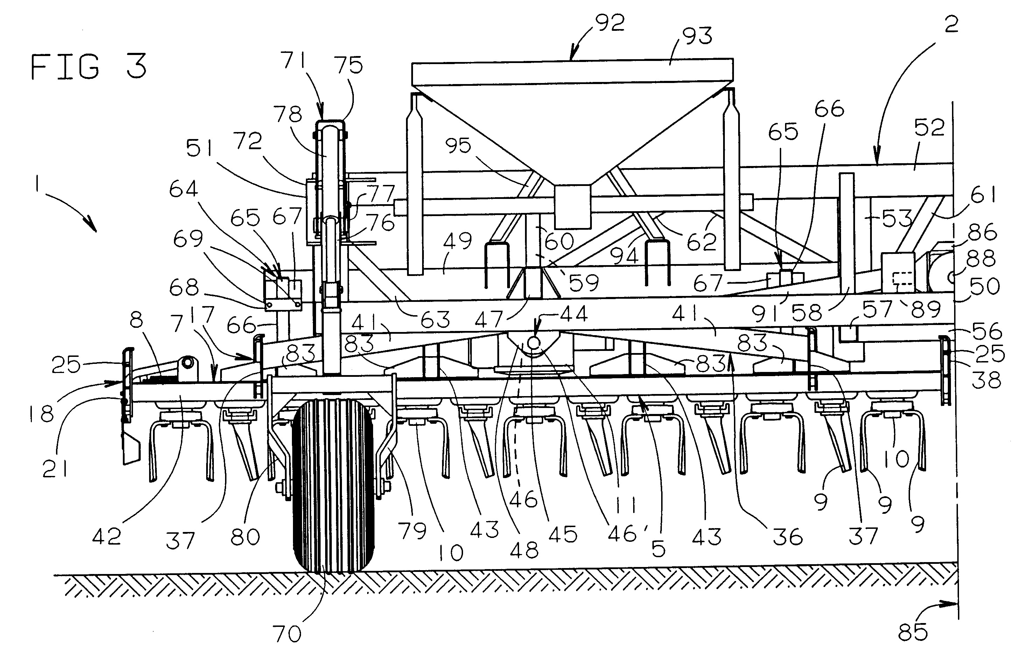

Chaque groupe d'outils de travail du sol (5) comporte une poutre support (7) avec un caisson (8) sous lequel sont agencés des outils de travail du sol (9). Ces outils de travail du sol (9) sont liés à des rotors (10) (figure 3) lesquels traversent au moins sensiblement verticalement le fond du caisson (8) et sont munis, à leur partie inférieure, d'au moins un desdits outils de travail du sol (9). Chaque rotor (10) est guidé dans le caisson (8) à l'aide d'un palier (non représenté) d'axe dirigé au moins sensiblement verticalement. A chaque rotor (10) est également fixée une roue dentée cylindrique (non représentée) implantée à l'intérieur du caisson (8). Ces roues dentées (non représentées) sont alignées horizontalement et engrènent les unes avec les autres.

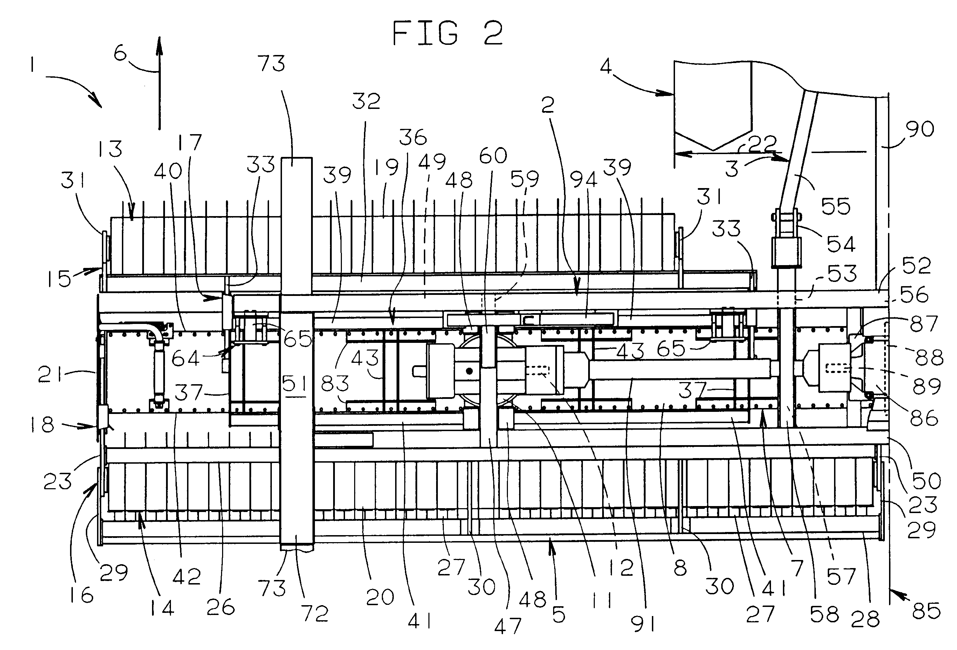

Au-dessus de chaque caisson (8), est en sus fixé un carter latéral (11). Celui-ci se situe, en vue de dessus, au moins sensiblement dans la partie centrale du caisson (8) et est réalisé sous forme de boîte de vitesses. Le carter latéral (11) reçoit le mouvement de rotation au moyen d'un arbre d'entrée (12) (figure 2) dirigé transversalement à la direction de travail (6) et orienté vers le groupe d'outils de travail du sol adjacent (5). Le mouvement de rotation est ensuite communiqué par l'intermédiaire du carter latéral (11) à l'une des roues dentées (non représentées) du caisson (8) qui le transmet à son rotor (10) ainsi qu'aux autres rotors (10) via les autres roues dentées.

Chaque groupe d'outils de travail du sol (5) comporte également deux éléments roulants (13, 14). Ces derniers sont implantés respectivement juste devant et juste derrière la poutre support (7) correspondante. Les deux éléments roulants (13, 14) déterminent la profondeur de travail des outils de travail du sol (9) de ladite poutre support (7).

Chaque élément roulant (13, 14) est lié à la poutre support (7) au moyen d'un dispositif de liaison (15, 16) correspondant, de sorte à autoriser un déplacement en hauteur de chaque élément roulant (13, 14) par rapport à la poutre support (7). Par ailleurs, chaque dispositif de liaison (15, 16) comporte un dispositif de réglage de la profondeur de travail (17, 18). Les dispositifs de réglage de la profondeur de travail (17, 18) limitent, au travail, uniquement vers le bas le déplacement de ladite poutre support (7) par rapport aux deux éléments roulants (13, 14). Grâce à cette caractéristique particulièrement intéressante de la herse rotative (1) selon l'invention, la poutre support (7) de chaque groupe d'outils de travail du sol (5) peut s'escamoter provisoirement vers le haut lorsque les outils de travail du sol (9) rencontrent un obstacle enfoui dans le sol, pendant que les deux éléments roulants (13, 14) continuent à rouler sur le sol.

Dans l'exemple de réalisation des figures 1 à 4, les éléments roulants (13, 14) sont des rouleaux (19, 20). Le rouleau arrière (20) s'étend avantageusement sur toute la largeur de travail de la poutre support (7) et le rouleau avant (19) s'étend du bord latéral extérieur (21) de la poutre support (7) jusqu'à la voie (22) du tracteur (4). C'est-à-dire que le rouleau avant (19) a environ les trois quarts de la longueur de la poutre support (7).

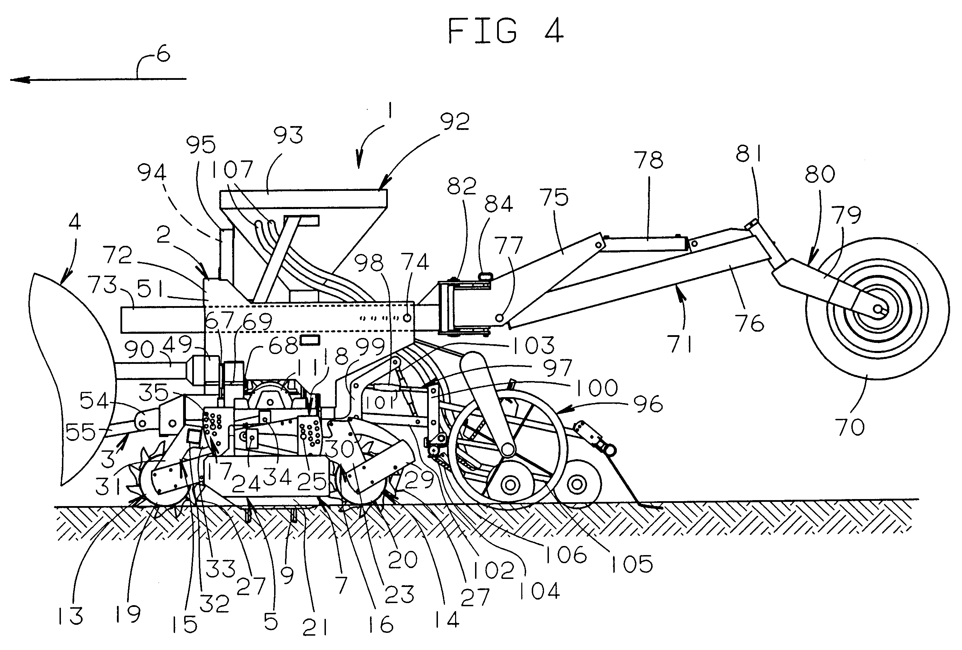

Le rouleau arrière (20), du type "Packer" dans l'exemple représenté, est guidé dans les extrémités arrière de deux bras latéraux arrière (23). A leur extrémité avant, ces deux bras latéraux arrière (23) sont liés au caisson (8) au moyen d'une articulation (24) (figure 4) d'axe au moins sensiblement parallèle audit caisson (8). Le déplacement en hauteur du rouleau arrière (20) par rapport à la poutre support (7) s'effectue donc par pivotement autour de l'axe de ladite articulation (24). Le dispositif de réglage arrière (18) de la profondeur de travail est connu de l'homme de l'art et ne sera de ce fait pas décrit en détail. Toutefois, on peut remarquer que le dispositif de réglage arrière (18) comporte deux butées (25) (figures 3 et 4) limitant vers le haut le pivotement des bras latéraux arrière (23).

Tel que représenté sur les figures 1 et 2, les deux bras latéraux arrière (23) sont liés rigidement entre eux au moyen d'un longeron arrière (26) s'étendant au moins sensiblement parallèlement à la poutre support (7). Ce longeron arrière (26) rigidifie lesdits bras latéraux arrière (23) et garantit un bon guidage du rouleau arrière (20). Le nettoyage du rouleau arrière (20) est réalisé à l'aide d'une pluralité d'outils de nettoyage (27) fixés à un longeron support (28) situé derrière le longeron arrière (26). A chacune de ses extrémités longitudinales, le longeron support (28) est lié rigidement aux bras latéraux arrière (23) au moyen d'une paroi latérale (29) correspondante. Celle-ci est fixée au bras latéral arrière respectif (23) dans le voisinage de l'axe de roulement du rouleau arrière (20) et assure un positionnement précis des outils de nettoyage (27) liés au longeron support (28) par rapport au rouleau arrière (20). Entre le longeron support (28) et le longeron arrière (26) sont encore implantés des organes rigidifiants (30). Ces organes rigidifiants (30) apparaissent sur les figures 1, 2 et 4 et limitent la flexion du longeron support (28) et du longeron arrière (26).

Le rouleau avant (19), quant à lui, est également du type "Packer" dans l'exemple représenté. Le dispositif de liaison avant (15) liant le rouleau avant (19) à la poutre support (7) comporte deux bras latéraux avant (31), un longeron avant (32) et deux bras de guidage avant (33). Le rouleau avant (19) est guidé dans les extrémités frontales des deux bras latéraux avant (31) qui s'étendent au moins sensiblement dans le prolongement des bras latéraux arrière (23). A leur extrémité arrière, les deux bras latéraux avant (31) sont fixés au longeron avant (32) qui est implanté au moins sensiblement parallèlement à la poutre support (7) et qui porte les deux bras de guidage avant (33). Les deux bras de guidage avant (33) sont décalés transversalement par rapport aux bras latéraux avant (31) et liés à la poutre support (7) au moyen d'une articulation (34) (figure 4) d'axe au moins sensiblement parallèle à la poutre support (7). D'après la figure 4, on peut constater que l'axe de l'articulation (34) des bras de guidage avant (33) et l'axe de l'articulation (24) des bras latéraux arrière (23) s'étendent en vue latérale au moins sensiblement à mi-distance des axes de roulement des deux rouleaux (19, 20). Le déplacement en hauteur du rouleau avant (19) par rapport à la poutre support (7) s'effectue par pivotement autour de l'axe de l'articulation correspondante (34). Comme le dispositif de réglage arrière (18), le dispositif de réglage avant (17) est connu de l'homme de l'art et ne sera de ce fait pas décrit en détail. Toutefois, on peut observer que le dispositif de réglage avant (17) comporte également deux butées (35) limitant vers le haut le pivotement des bras de guidage avant (33).

Le nettoyage du rouleau avant (19) est réalisé d'une manière similaire au nettoyage du rouleau arrière (20) et ne sera de ce fait pas redécrit.

La poutre support (7) comporte en sus une structure porteuse (36) implantée au-dessus du caisson (8). Celle-ci comporte deux parois extérieures (37) s'étendant au moins sensiblement suivant la direction de travail (6) et fixées à la partie supérieure du caisson (8) de manière symétrique par rapport au carter latéral (11). En particulier sur les figures 1 à 3, il apparaît que chacune de ces parois extérieures (37) est implantée au moins sensiblement à mi-distance entre le carter latéral (11) et un bord latéral (21, 38) du caisson (8). C'est à ces parois extérieures (37) que sont articulés les bras de guidage avant (33) du dispositif de liaison avant (15). Par ailleurs, la structure porteuse (36) comporte également deux poutres frontales (39) implantées juste devant le bord frontal (40) du caisson (8) et deux poutres postérieures (41) implantées juste derrière le bord postérieur (42) dudit caisson (8). Chaque poutre (39, 41) est fixée à l'une de ses extrémités correspondantes à l'une des parois extérieures (37) dans le voisinage du caisson (8), et s'étend en direction du carter latéral (11), au moins sensiblement perpendiculairement à la direction de travail (6) et légèrement vers le haut. A leur extrémité supérieure, les poutres (39, 40) sont fixées entre elles deux à deux. En sus, les poutres frontales (39) et les poutres postérieures (41) sont rigidifiées au moyen de deux parois intérieures (43) implantées chacune environ à mi-distance entre une paroi extérieure (37) et le carter latéral (11).

Dans cet exemple de réalisation selon l'invention, la structure porteuse (36) est liée au caisson (8) au moyen de cornières (83). Celles-ci s'étendent au moins sensiblement parallèlement à la poutre support (7) ; certaines d'entre elles sont implantées près du bord frontal (40) du caisson (8), les autres s'étendant près du bord postérieur (42) dudit caisson (8). Grâce à cet agencement, la structure porteuse (36) est liée de manière particulièrement rigide au caisson (8).

La structure porteuse (36) ci-décrite supporte le caisson (8) de la poutre support (7) ainsi que les deux éléments roulants (13, 14). La structure porteuse (36) est liée à la structure d'attelage (2) de la herse rotative (1) au moyen d'une structure de liaison (44) (figure 3) réalisée sous forme d'une articulation de liaison (45) d'axe géométrique dirigé au moins sensiblement parallèlement à la direction de travail (6). Cette articulation de liaison (45) comporte deux parties : une partie frontale (46) implantée juste sous la liaison centrale des deux poutres frontales (39) et une partie postérieure (46') implantée juste sous la liaison centrale des deux poutres postérieures (41), de sorte que lesdites parties (46, 46') s'étendent de part et d'autre du carter latéral (11). Etant donné que chaque partie (46, 46') de l'articulation (45) est implantée sous la liaison centrale des poutres (39, 41), l'articulation de liaison (45) est liée plus solidement à la structure porteuse (36) de chaque groupe d'outils de travail du sol (5).

La structure d'attelage (2), quant à elle, comporte deux poutrelles (47) s'étendant juste au-dessus de chaque articulation de liaison (45) et au moins sensiblement parallèlement à l'axe de ladite articulation de liaison (45). A chaque poutrelle (47) sont fixées deux chapes (48) s'étendant vers le bas et entre les ailes de chacune desquelles est guidée une partie correspondante (46, 46') de l'articulation de liaison (45). A leur extrémité avant, chaque poutrelle (47) est fixée à une poutre avant correspondante (49), alors que l'extrémité arrière de chaque poutrelle (47) est fixée à une poutre arrière (50). Cette dernière s'étend légèrement plus bas que les poutres avant (49). Les poutres avant (49) et la poutre arrière (50) s'étendent au moins sensiblement parallèlement aux poutres supports (7) et sont par ailleurs liées rigidement entre elles au moyen de deux parois de liaison (51). Comme représenté sur les figures 1 à 3, les parois de liaison (51) sont implantées de part et d'autre des deux carters latéraux (11) et s'étendent au moins sensiblement perpendiculairement aux poutres supports (7). Les parois de liaison (51) sont par ailleurs liées rigidement entre elles par l'intermédiaire d'une poutre supérieure (52) implantée au moins sensiblement à la verticale des poutres avant (49). A l'extrémité latérale intérieure de chaque poutre avant (49) est fixé un montant intérieur (53) s'étendant vers le haut jusqu'à la poutre supérieure (52). A chacun de ces deux montants intérieurs (53) est fixée une chape oscillante (54) destinée à être liée au bras inférieur (55) correspondant de l'attelage arrière (3) du tracteur (4). Les chapes oscillantes (54) sont implantées plus précisément sur les faces frontales des montants intérieurs (53) et légèrement plus bas que les poutres avant (49). Afin de rigidifier cette partie de la structure d'attelage (2), une poutre centrale (56) (figure 3) s'étend entre les deux montants intérieurs (53) au moins sensiblement à la hauteur des chapes oscillantes (54). De plus, dans un plan au moins sensiblement vertical contenant chaque montant intérieur (53), s'étendent d'une part une poutrelle intérieure (57) implantée entre la poutre centrale (56) et la poutre arrière (50) et d'autre part une traverse intérieure (58) implantée entre la poutre supérieure (52) et ladite poutre arrière (50).

Sur les figures, on peut également voir que dans le voisinage de chaque poutrelle (47) qui est implantée au-dessus de l'articulation de liaison (45), est également prévu un montant (59) s'étendant entre la poutre avant (49) et la poutre supérieure (52), ainsi qu'une traverse (60) implantée entre ladite poutrelle (47) et ledit montant (59). La rigidité de la structure d'attelage (2) est encore renforcée au moyen de trois paires de traverses (61, 62) agencées respectivement entre la poutre centrale (56) et la poutre supérieure (52), ainsi qu'entre chaque poutre avant (49) et ladite poutre supérieure (52). De surcroît, une traverse (63) est implantée entre chaque paroi de liaison (51) et la poutre arrière (50). Compte tenu du fait que la structure d'attelage (2) s'étend au-dessus des poutres supports (7), le centre des masses de cette herse rotative (1) est particulièrement proche des roues arrière du tracteur (4).

Tel que visible sur les figures 1 à 4, la herse rotative (1) selon l'invention comporte également des organes de guidage (64) implantés entre chaque groupe d'outils de travail du sol (5) et la structure d'attelage (2). Les organes de guidage (64) servent à encaisser dans les deux sens, au moins une partie du moment des efforts produits par l'action du sol sur chaque groupe d'outils de travail du sol (5), par rapport à l'articulation de liaison (45), lors de l'avancement de la herse rotative (1) au travail. Dans l'exemple ci-représenté, les organes de guidage (64) associés à chaque groupe d'outils de travail du sol (5) comportent deux ensembles de guidage (65). Chaque ensemble de guidage (65) comprend un montant de guidage (66) fixé à son extrémité inférieure à la paroi extérieure (37) correspondante. La face frontale et la face postérieure du montant de guidage (66) sont au moins sensiblement perpendiculaires à la direction de travail (6), de sorte à pouvoir coulisser entre deux butées respectives (67, 68). L'une (67) des butées (67, 68) est fixée directement à la face postérieure de la poutre avant (49) et l'autre (68) est fixée à la poutre avant (49) au moyen de deux boulons (69) implantés de part et d'autre du montant de guidage (66). Grâce aux deux boulons (69), le jeu fonctionnel entre les butées (67, 68) et le montant de guidage (66) peut être aisément réglé.

Deux roues (70), implantées derrière les éléments roulants arrière (14), sont chacune liée à la paroi de liaison correspondante (51) de la structure d'attelage (2) au moyen d'un dispositif de guidage (71) respectif. A cet effet, chaque paroi de liaison (51) comporte une console (72) dans laquelle est montée coulissante, suivant une direction au moins sensiblement perpendiculaire aux poutres supports (7), un longeron de guidage (73). En faisant coulisser le longeron de guidage (73) dans la console correspondante (72), la roue (70) peut être rapprochée ou éloignée de la structure d'attelage (2).

Le maintien dans la position choisie du longeron de guidage (73) est réalisé au moyen d'une broche de verrouillage (74) destinée à traverser latéralement la console (72) et le longeron de guidage (73). Ce longeron de guidage (73) s'étend au moins sensiblement à la même hauteur que la poutre supérieure (52) de la structure d'attelage (2) et supporte à son extrémité arrière une console de guidage (75). A cette console de guidage (75) est lié un bras de guidage (76) au moyen d'une articulation cylindrique (77) permettant d'amener la roue (70) en contact avec le sol ou d'éloigner ladite roue (70) du sol. Un vérin de manoeuvre (78) est implanté à cet effet entre la console de guidage (75) et ledit bras de guidage (76). Comme visible sur les figures 1, 3 et 4, chaque roue (70) est guidée dans les ailes (79) d'une chape (80) liée à l'extrémité arrière du bras de guidage (76) à l'aide d'une liaison pivot (81) d'axe de pivotement dirigé vers le haut de sorte que, lorsque la roue (70) est en contact avec le sol, l'axe de pivotement de la liaison pivot (81) soit au moins sensiblement vertical.

Afin de pouvoir transporter en long la herse rotative (1) plus aisément, la console de guidage (75) est liée au longeron de guidage (73) au moyen d'une liaison pivot (82) d'axe dirigé vers le haut. De cette manière, la console de guidage (75), le bras de guidage (76), la chape (80) et la roue (70) peuvent être pivotés vers l'intérieur de la herse rotative (1) pour obtenir une largeur de transport plus réduite. Un organe de verrouillage (84) permet de verrouiller la console de guidage (75) par rapport au longeron de guidage (73) dans sa position de transport (non représentée) ou dans sa position de travail (figures 1 à 4).

Globalement, il apparaît sur les figures 1 et 3 que les roues (70), la structure d'attelage (2) et les groupes d'outils de travail du sol (5) s'étendent au moins sensiblement symétriquement par rapport à un plan vertical médian (85) dirigé suivant la direction de travail (6). Dans ce plan est par ailleurs implanté un carter central (86). Celui-ci est fixé de manière amovible à la structure d'attelage (2) au moyen d'un support (87) sur lequel il repose (figure 2).

Le carter central (86) comporte un arbre d'entrée (88) s'étendant horizontalement dans le plan vertical médian (85) et traversant le carter central (86) de part en part, afin de permettre l'entraînement d'une éventuelle machine agricole complémentaire placée derrière ce dernier. De part et d'autre du carter central (86) débouche un arbre de sortie (89) respectif orienté en direction du carter latéral (11) correspondant. Chacun de ces arbres de sortie (89) est lié en rotation avec l'arbre d'entrée (88) à l'aide d'engrenages (non représentés) logés dans le carter central (86).

L'entraînement des outils de travail du sol (9) s'effectue à partir de la prise de force (non représentée) du tracteur (4) qui entraîne, par l'intermédiaire d'un arbre télescopique à joints universels (90), l'arbre d'entrée (88) du carter central (86). L'arbre télescopique à joints universels (90) s'étend avantageusement dans le plan vertical médian (85) et passe entre la paire de traverses (61) et la poutre centrale (56) de la structure d'attelage (2). A l'intérieur du carter central (86), l'arbre d'entrée (88) transmet le mouvement de rotation à chaque arbre de sortie (89). Entre chaque arbre de sortie (89) du carter central (86) et l'arbre d'entrée (12) du carter latéral (11) correspondant est monté un arbre télescopique à joints universels (91) respectif. Ce dernier s'étend entre la poutrelle intérieure (57), la traverse intérieure (58) et le montant intérieur (53), afin de transmettre le mouvement de rotation depuis le carter central (86) jusqu'au carter latéral (11) correspondant. Ensuite, le mouvement de rotation est, comme dit précédemment, communiqué à l'une des roues dentées (non représentées) du caisson (8), qui le transmet à son rotor (10) ainsi qu'aux autres rotors (10) via les autres roues dentées du caisson (8).

Sur les figures 3 et 4, il apparaît également que la herse rotative (1) selon l'invention est équipée d'un semoir (92). Avantageusement, le semoir (92) est pneumatique et comporte deux trémies (93) implantées directement sur la structure d'attelage (2). A cet effet, la structure d'attelage (2) comporte deux triangles d'attelage (94) fixés chacun à sa partie supérieure à la poutre supérieure (52) de la structure d'attelage (2) et à sa partie inférieure à la poutre avant (49) correspondante de ladite structure d'attelage (2). Par ailleurs, ces triangles d'attelage (94) sont implantés au moins sensiblement symétriquement de part et d'autre du carter central (86). Dans l'exemple représenté sur les figures 1 à 4, chaque triangle d'attelage (94) est implanté, vu de dessus, dans le proche voisinage de l'articulation de liaison (45) correspondante. C'est à ce triangle d'attelage (94) qu'est liée de manière aisément amovible, la trémie (93) au moyen d'organes de liaison complémentaires (95) connus de l'homme de l'art et qui ne seront de ce fait pas décrits plus en détail.

Le semoir (92) comporte aussi deux dispositifs d'implantation des graines dans le sol (96) (figure 4). Chaque dispositif d'implantation (96) est lié au groupe d'outils de travail du sol (5) correspondant au moyen d'une structure réglable en hauteur (97). Cette structure réglable (97) est avantageusement fixée au dispositif de liaison arrière (16) et permet d'adapter le dispositif d'implantation (96) correspondant à la profondeur de travail définie par les deux éléments roulants (13, 14). A cet effet, la structure réglable (97) comporte deux quadrilatères déformables (98) implantés, en vue arrière, de part et d'autre de l'articulation de liaison (45). Chaque quadrilatère déformable (98), du type parallélogramme dans l'exemple représenté, comporte deux côtés (99, 100) dirigés vers le haut et deux bielles (101, 102) s'étendant au moins sensiblement horizontalement entre lesdits côtés (99, 100). L'un (99) des côtés (99, 100) est fixé à son extrémité inférieure au longeron arrière (26) et l'autre (100) est solidaire du dispositif d'implantation (96). L'adaptation du dispositif d'implantation (96) à la profondeur de travail et le maintien dans celle-ci sont réalisés au moyen d'un premier organe de réglage (103) de longueur réglable, implanté entre l'une (102) des bielles (101, 102) du quadrilatère déformable (98) et l'un (99) des côtés (99, 100). Ce faisant, le dispositif d'implantation (96) peut être déplacé en hauteur avec précision, par rapport à l'élément roulant arrière (14). De plus, l'une (101) des bielles (101, 102) du quadrilatère déformable (98) est également de longueur réglable. La modification de la longueur de cette bielle réglable (101) change l'inclinaison du dispositif d'implantation (96) par rapport au sol. Grâce à cette bielle réglable (101) et à l'organe de réglage (103), chaque quadrilatère (98) peut être déformé, de sorte à positionner le dispositif d'implantation (96) avec précision par rapport au dispositif de liaison arrière (16) de l'élément roulant arrière (14).

Le dispositif d'implantation (96) comporte une barre (104) fixée aux côtés arrière (100) des deux quadrilatères déformables (98). A cette barre (104) sont articulées des conduites d'implantation (105) servant à implanter les graines dans le sol. De ce fait, chaque conduite d'implantation (105) est susceptible de pivoter indépendamment des autres conduites d'implantation (105). Un ressort de terrage (106), prévu entre chaque conduite d'implantation (105) et la barre (104), tend à ramener et à maintenir l'extrémité arrière de chaque conduite d'implantation (105) à la profondeur de travail choisie.

La machine agricole de travail du sol (1) selon l'invention fonctionne de la manière suivante.

Au travail (figure 4), la machine (1) est attelée au tracteur (4) qui entraîne l'arbre d'entrée (88) du carter central (86) au moyen de l'arbre télescopique à joints universels (90), tout en tirant ladite machine (1) suivant le sens d'avance au travail (6). Le mouvement de rotation de l'arbre d'entrée (88) est transmis aux outils de travail du sol (9) de chaque groupe d'outils de travail du sol (5), via l'arbre de sortie (89) du carter central (86), l'arbre télescopique à joints universels (91), l'arbre d'entrée (12) du carter latéral (11), les roues dentées (non représentées) du caisson (8) et les rotors (10). Sous l'action des outils (9) qui travaillent le sol et du poids de la machine (1), les outils (9) de chaque groupe d'outils de travail du sol (5) s'enfoncent dans le sol jusqu'à la profondeur déterminée par les deux dispositifs de réglage de la profondeur de travail (17, 18). Dès lors, l'élément roulant avant (13) et l'élément roulant arrière (14) roulent sur le sol et empêchent la poutre support (7) de s'enfoncer plus profondément dans le sol. Vue perpendiculairement à la direction de travail (6) (figure 4), la machine (1) s'adapte aisément au relief du sol. En effet, compte tenu du fait que la machine (1) est liée uniquement aux bras inférieurs (55) de l'attelage arrière (3) du tracteur (4), la machine (1) peut pivoter autour d'un axe dirigé perpendiculairement à la direction de travail (6). Les roues (70), quant à elles, sont dans leur position relevée et ne gênent nullement l'adaptation au relief du sol de la machine (1).

Vue suivant la direction de travail (figure 3), la machine (1) s'adapte également très facilement au relief du sol. En effet, comme chaque groupe d'outils de travail du sol (5) est lié à la structure d'attelage (2) au moyen d'une articulation de liaison (45) d'axe dirigé au moins sensiblement suivant la direction de travail (6), chaque groupe (5) peut pivoter autour de cet axe pour s'adapter au relief du sol. En sus, vu que la structure d'attelage (2) est liée aux bras inférieurs (55) à l'aide des chapes oscillantes (54), la structure d'attelage (2) est susceptible de pivoter autour d'un axe géométrique dirigé suivant la direction de travail (6) et permet aux groupes d'outils de travail du sol (5) de se déplacer en hauteur par rapport au tracteur (4).

Lors de l'avance de la machine (1), le sol exerce sur les outils de travail du sol (9) des efforts s'opposant à l'avance desdits outils de travail du sol (9). Ces efforts sont en partie au moins encaissés par les organes de guidage (64) de sorte que lesdits efforts n'agissent pas intégralement sur les chapes (48) des articulations de liaison (45). Dans l'exemple représenté sur les figures 1 à 4, les montants (66) des organes de guidage (64) sont destinés à s'appuyer contre les butées (67, 68). Il va de soi que pour limiter les frottements entre chaque montant (66) et les butées correspondantes (67, 68), ces butées (67, 68) pourraient également être des galets.

Les graines contenues dans les trémies (93) du semoir (92) sont transportées jusqu'au dispositif d'implantation (96) correspondant au moyen d'une pluralité de tuyaux (107). A l'intérieur de chaque tuyau (107), les graines sont transportées par un flux d'air créé par une soufflerie centrale (non représentée). Celle-ci est habituellement implantée juste derrière le carter central (86) et est entraînée au moyen de l'arbre d'entrée (88) traversant ledit carter central (86). Les graines transportées dans chaque tuyau (107) s'écoulent ensuite dans la conduite d'implantation (105) correspondante, implantant les graines dans le sol.

En bout de champ, lorsque l'utilisateur désire lever la machine (1), il commence par amener les deux roues (70) en contact avec le sol grâce aux vérins de manoeuvre (78). Ensuite, il continue de commander l'alimentation des vérins de manoeuvre (78), tout en agissant sur le dispositif de relevage du tracteur (4), de sorte à déplacer simultanément vers le haut les bras inférieurs (55) du tracteur (4). Ce faisant, les poutres supports (7) de la machine (1) s'éloignent du sol. Dès que la machine (1) est dans sa position haute, l'utilisateur peut manoeuvrer pour venir placer la machine (1) en face d'une autre bande de terre à travailler. Après avoir abaissé la machine (1), en descendant les bras inférieurs (55) du dispositif de relevage du tracteur (4) et en remontant les roues (70), le travail peut reprendre.

Lorsque le travail est fini, la machine (1) est déposée sur une remorque non représentée et les roues (70) sont ramenées vers le centre de ladite machine (1), afin de réduire la largeur de transport.

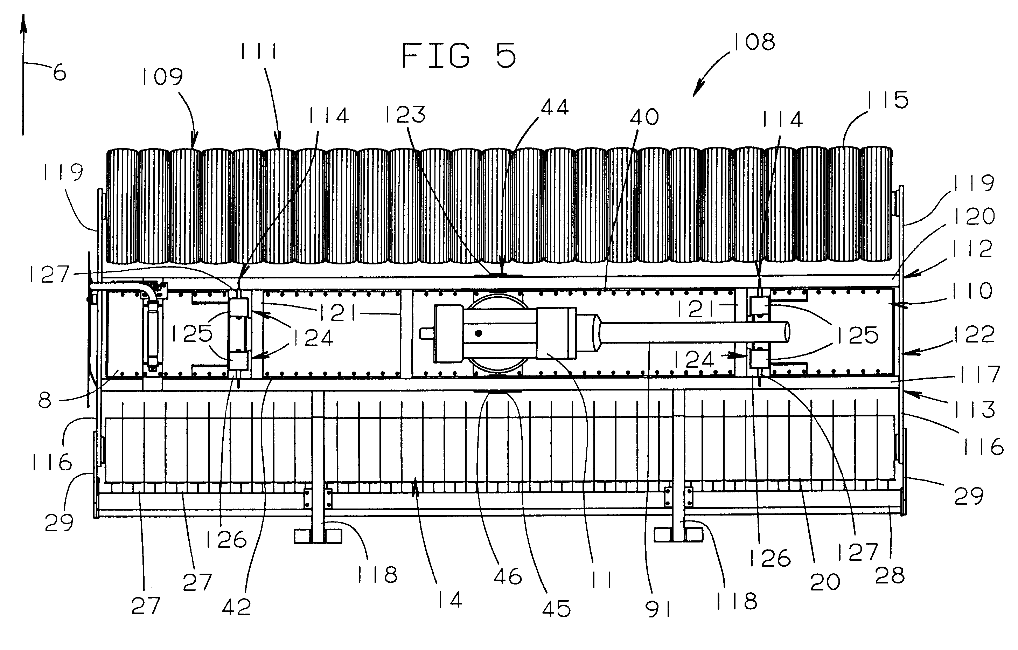

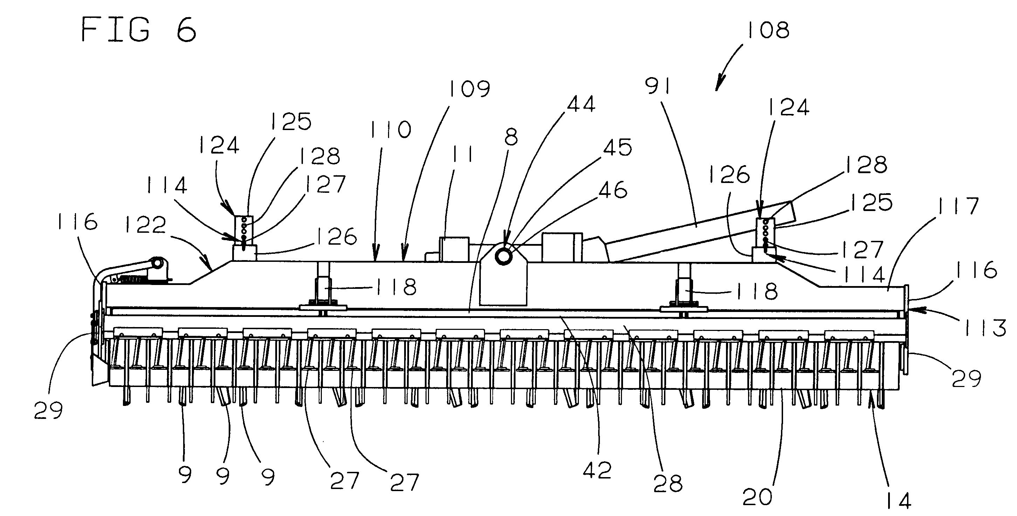

Sur les figures 5 à 7 apparaît un autre exemple de réalisation d'une herse rotative (108) selon l'invention.

Cette herse rotative (108) comporte la même structure d'attelage (2), les mêmes roues (70), les mêmes dispositifs de guidage (71) et le même semoir (92) que la herse rotative (1) du précédent exemple de réalisation. De ce fait, ces éléments (2, 70, 71, 92) ne seront pas redécrits. Les seules différences entre la présente herse rotative (108) et la herse rotative (1) précédemment décrite, se situent dans les groupes d'outils de travail du sol (109).

Chaque groupe d'outils de travail du sol (109) comporte une poutre support (110) avec un caisson (8) et un carter latéral (11). Ces derniers sont identiques à ceux de la poutre support (7).

Chaque groupe d'outils de travail du sol (109) comporte également deux éléments roulants (111, 14), implantés respectivement juste devant et juste derrière la poutre support (110) correspondante. Comme précédemment, les deux éléments roulants (111, 14) déterminent la profondeur de travail des outils de travail du sol (9) de ladite poutre support (110).

Chaque élément roulant (111, 14) est lié à la poutre support (110) au moyen d'un dispositif de liaison (112, 113) correspondant. Ces dispositifs de liaison (112, 113) sont fixés entre eux de sorte à autoriser un déplacement en hauteur de la poutre support (110) par rapport aux éléments roulants (111, 14). En sus, les dispositifs de liaison (112, 113) comportent un dispositif de réglage de la profondeur de travail (114) limitant, au travail, uniquement vers le bas le déplacement de ladite poutre support (110) par rapport aux deux éléments roulants (111, 14). Grâce à cette caractéristique particulièrement intéressante de la herse (108) selon l'invention, la poutre support (110) de chaque groupe d'outils de travail du sol (109) peut s'escamoter provisoirement vers le haut, lorsque les outils de travail du sol (9) rencontrent un obstacle enfoui dans le sol, pendant que les deux éléments roulants (111, 14) continuent à rouler sur le sol.

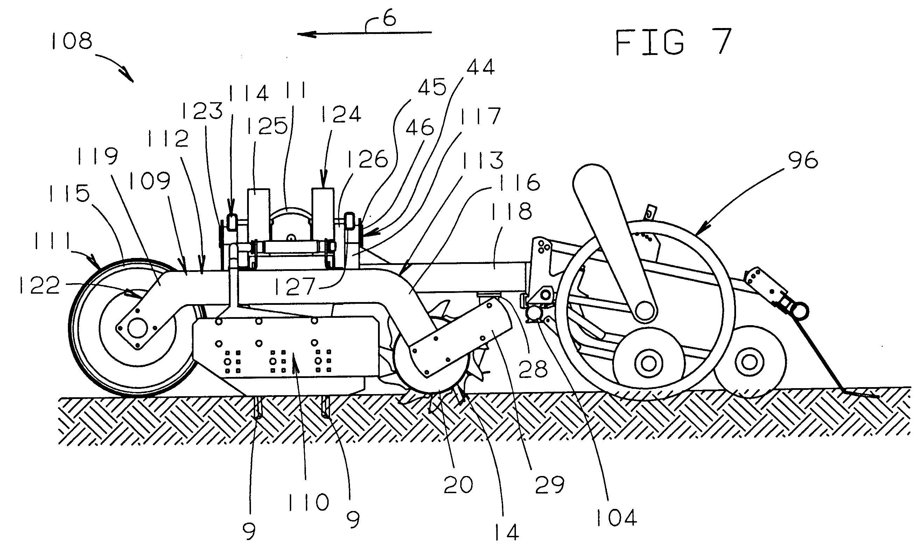

Comme dans l'exemple de réalisation des figures 1 à 4, les éléments roulants (111, 14) sont des rouleaux (115, 20). Toutefois, dans l'exemple de réalisation des figures 5 à 7, le rouleau avant (115) est un rouleau à pneus s'étendant sur au moins sensiblement toute la largeur de travail de la poutre support (110). Le rouleau arrière (20), du type "Packer" dans l'exemple représenté, est guidé dans les extrémités arrière de deux bras latéraux arrière (116) du dispositif de liaison arrière (113). Ces deux bras latéraux arrière (116) sont liés rigidement entre eux au moyen d'un longeron arrière (117) s'étendant au moins sensiblement parallèlement à la poutre support (110) et au moins sensiblement dans le voisinage du bord postérieur (42) du caisson (8). Ce longeron arrière (117) rigidifie lesdits bras latéraux arrière (23) et garantit un bon guidage du rouleau arrière (20). Le nettoyage du rouleau arrière (20) est réalisé à l'aide d'une pluralité d'outils de nettoyage (27) fixés à un longeron support (28) situé derrière le longeron arrière (117). A chacune de ses extrémités longitudinales, le longeron support (28) est lié rigidement aux bras latéraux arrière (116) au moyen d'une paroi latérale (29) correspondante. Celle-ci est fixée au bras latéral arrière respectif (116) dans le voisinage de l'axe de roulement du rouleau arrière (20) et assure un positionnement précis des outils de nettoyage (27) liés au longeron support (28) par rapport au rouleau arrière (20). Entre le longeron support (28) et le longeron arrière (117), sont encore implantés des organes rigidifiants (118). Ces organes rigidifiants (118) apparaissent sur les figures 5 à 7 et limitent la flexion du longeron support (28) et du longeron arrière (117). De plus, ces organes rigidifiants (118) s'étendent jusque derrière le longeron support (28). C'est à l'extrémité arrière de ces organes rigidifiants (118) qu'est fixée la barre (104) du dispositif d'implantation (96) (figure 7).

Le dispositif de liaison avant (112) liant le rouleau avant (115) à la poutre support (110) comporte deux bras latéraux avant (119) et un longeron avant (120). Le rouleau avant (115) est guidé dans les extrémités frontales des deux bras latéraux avant (119) qui s'étendent au moins sensiblement dans le prolongement des bras latéraux arrière (116). Entre les bras latéraux avant (119) est implanté le longeron avant (120) qui s'étend au moins sensiblement parallèlement à la poutre support (110) et dans le voisinage du bord frontal (40) du caisson (8).

Comme dit précédemment, les dispositifs de liaison (112, 113) sont fixés entre eux. En effet, les bras latéraux arrière (116) et les bras latéraux avant (119) sont confondus et entre le longeron arrière (117) et le longeron avant (120), sont fixées des poutrelles de liaison (121). Les bras latéraux (116, 119), les longerons (117, 120) et les poutrelles de liaison (121) forment de ce fait une structure de guidage (122) rigide qui s'appuie sur le sol au moyen des deux rouleaux (115, 20). C'est cette structure de guidage (122) appartenant aux deux dispositifs de liaison (112, 113) qui est liée à la structure d'attelage (2) au moyen de la structure de liaison (44). Dans cet exemple de réalisation, comme dans l'exemple précédent, la structure de liaison (44) est une articulation de liaison (45) centrale avec une partie frontale (123) et une partie postérieure (46). Comme visible sur la figure 5, la partie frontale (123) est solidaire du longeron avant (120) et la partie postérieure (46) est fixée au longeron arrière (117).

Les dispositifs de liaison (112, 113) comportent également des pièces de guidage (124). Ces pièces de guidage (124) sont implantées entre la structure de guidage (122) et le caisson (8), de sorte à autoriser principalement une translation du caisson (8) en hauteur par rapport à ladite structure de guidage (122). Pour ce faire, les pièces de guidage (124) de la présente machine de travail du sol (108) comportent des montants (125) fixés chacun à son extrémité inférieure au caisson (8) et des éléments de guidage (126) correspondant qui sont fixés à la structure de guidage (122). Lorsque les outils de travail du sol (9) de la poutre support (110) rencontrent un obstacle enfoui dans le sol, la poutre support (110) se déplace vers le haut guidée par les éléments de guidage (126) des dispositifs de liaison (112, 113), pour passer par-dessus ledit obstacle. Pendant ce temps, les rouleaux (115, 20) continuent à rouler sur le sol et la position du dispositif d'implantation (96) par rapport à la surface du sol reste inchangée. Dans l'exemple ci-représenté, les pièces de guidage (124) sont implantées de part et d'autre du carter latéral (11). Du reste, on peut remarquer qu'il y a quatre montants (125) dont deux sont implantés près du bord frontal (40) du caisson (8) et les deux autres près du bord postérieur (42) dudit caisson (8).

Comme dit précédemment, les dispositifs de liaison (112, 113) comportent encore un dispositif de réglage de la profondeur de travail (114). Celui-ci sert à limiter vers le bas le déplacement de la poutre support (110) par rapport à la structure de guidage (122). Dans cet exemple de réalisation, le dispositif de réglage de la profondeur de travail (114) comporte des broches (127) goupillées, destinées à traverser les montants (125) et à venir s'appuyer sur les éléments de guidage (126). La profondeur de travail désirée est réglée en plaçant chaque broche (127) dans l'un des multiples trous de réglage (128) prévus à cet effet dans le montant (125) correspondant.

Le fonctionnement de cette machine agricole de travail du sol (108) ne sera pas décrit puisqu'il peut être aisément déduit du fonctionnement de la machine agricole de travail du sol (1) précédemment décrite.

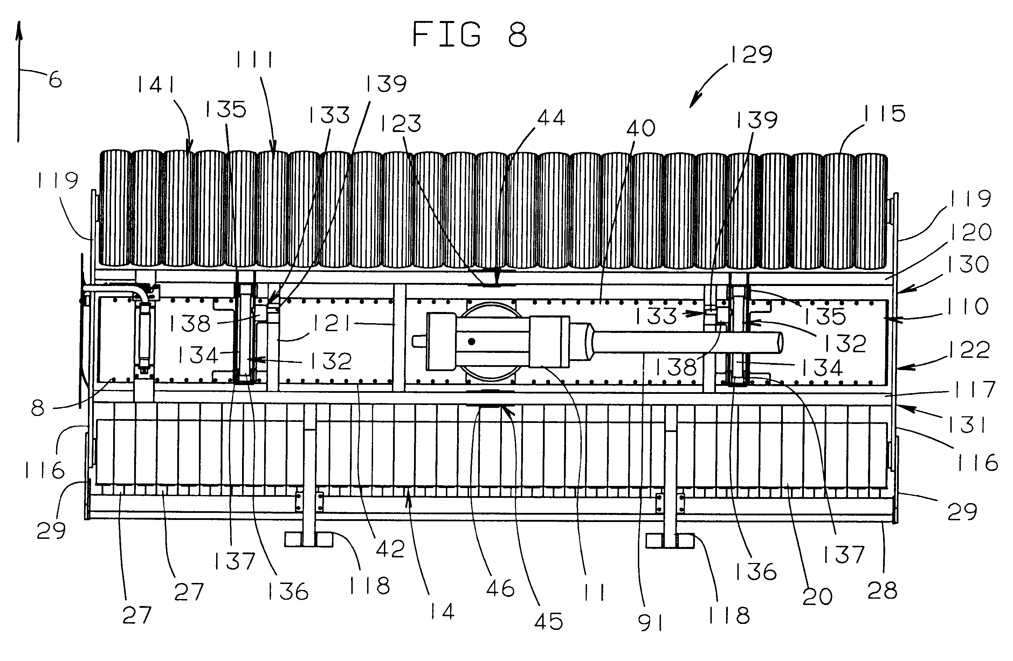

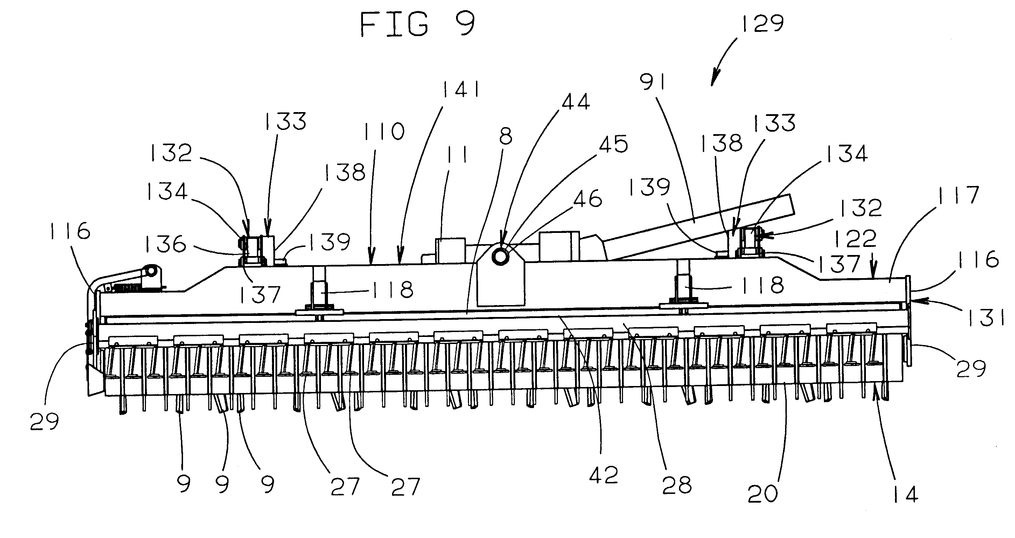

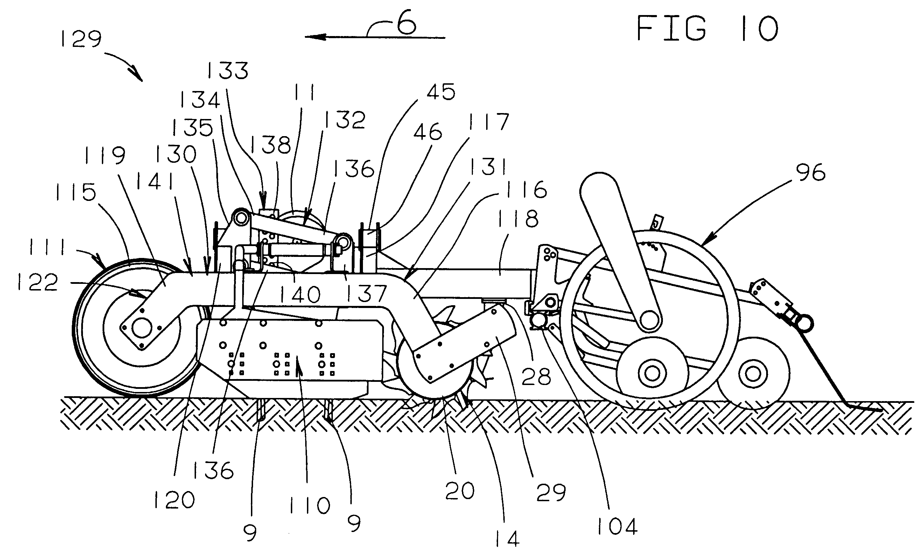

Sur les figures 8 à 10 apparaît un exemple supplémentaire de réalisation d'une herse rotative (129) selon l'invention.

Mis à part les éléments de guidage (126) et le dispositif de réglage de la profondeur de travail (114) de la précédente machine agricole de travail du sol (108), la présente machine agricole de travail du sol (129) comporte tous les moyens de la précédente machine agricole de travail du sol (108). De ce fait, ces moyens ne seront pas redécrits.

Les dispositifs de liaison (130, 131) de chaque groupe d'outils de travail du sol (141) de la présente herse rotative (129) comportent en effet des pièces de guidage (132) et un dispositif de réglage de la profondeur de travail (133) différents des précédents. Les pièces de guidage (132) comportent deux quadrilatères déformables vers le haut (134) qui sont implantés de part et d'autre du carter latéral (11).

Chaque quadrilatère déformable (134) forme au moins sensiblement un parallélogramme déformable s'étendant au moins sensiblement suivant la direction de travail entre le longeron avant (120) et le caisson (8).

A cet effet, chaque quadrilatère déformable (134) comporte une console avant (135) fixée au longeron avant (120) et à laquelle sont articulées deux bielles (136). Celles-ci s'étendent vers l'arrière et vers le bas jusqu'à une console arrière (137) fixée à son extrémité inférieure au caisson (8). De ce fait, lorsque les outils de travail du sol (9) de la poutre support (110) rencontrent un obstacle enfoui dans le sol, la poutre support (110) se déplace vers le haut, guidée par les quadrilatères déformables (134), sans que la position du dispositif d'implantation (96) par rapport à la surface du sol ne soit modifiée.

Le dispositif de réglage de la profondeur de travail (133), quant à lui, sert à limiter vers le bas le déplacement de la poutre support (110) par rapport à la structure de guidage (122). Dans cet exemple de réalisation, le dispositif de réglage de la profondeur de travail (114) comporte des montants (138) et des broches (139). Chaque broche (139) est destinée à traverser le montant (138) correspondant et à venir s'appuyer sur la structure de guidage (122). Chaque montant (138) est fixé à son extrémité inférieure au caisson (8) et s'étend dans le voisinage de l'une des poutrelles de liaison (121) de la structure de guidage (122), de sorte que chaque broche (139) puisse s'appuyer sur une poutrelle de liaison (121). La profondeur de travail désirée est réglée en plaçant chaque broche (139) dans l'un des multiples trous de réglage (140) prévus à cet effet dans le montant (138) correspondant.

Différentes modifications restent possibles, notamment en ce qui concerne la constitution des divers éléments ou par substitution d'équivalents techniques, sans pour autant sortir du domaine de protection défini par les revendications.

## Revendications

1. Machine agricole de travail du sol (1 ; 108 ; 129) comportant d'une part une structure d'attelage (2) munie de moyens (54) pour la liaison à l'arrière d'un tracteur agricole (4) de sorte à ce que la machine agricole soit notamment capable de pivoter autour d'un axe dirigé perpendiculairement à la direction d'avance (6) au travail et autour d'un axe dirigé suivant la direction d'avance (6) au travail, et d'autre part deux groupes (5 ; 109; 141) d'outils (9) de travail du sol s'étendant transversalement dans le prolongement l'un de l'autre et étant au moins sensiblement jointifs, lesdits groupes (5 ; 109 ; 141) d'outils (9) de travail du sol étant chacun lié à la structure d'attelage (2) au moyen d'une articulation cylindrique (45) autorisant le pivotement dudit groupe (5 ; 109 ; 141) d'outils (9) de travail du sol autour d'un axe géométrique dirigé vers l'avant, chacun desdits groupes (5 ; 109 ; 141) d'outils (9) de travail du sol comportant :
- une poutre support (7 ; 110) avec un caisson (8) sous lequel sont agencés les outils (9) de travail du sol, et munie d'un carter d'entraînement (11) servant à l'entraînement desdits outils (9) de travail du sol ;
- un élément roulant avant (13 ; 111) implanté devant la poutre support (7 ; 110) et lié à celle-ci au moyen d'un dispositif de liaison avant (15 ; 112 ; 130), et
- un élément roulant arrière (14) implanté derrière ladite poutre support (7 ; 110) et lié à celle-ci au moyen d'un dispositif de liaison arrière (16 ; 113 ; 131),
ladite machine agricole comportant encore deux roues (70) implantées chacune derrière un élément roulant arrière (14) correspondant et liées chacune à la structure d'attelage (2) au moyen d'un dispositif de guidage (71) qui permet, lorsque cela est souhaité, un déplacement en hauteur de la roue (70) par rapport à la structure d'attelage (2),
***caractérisée en ce que*** l'articulation cylindrique (45) se situe au moins sensiblement dans la partie centrale du caisson (8) et les moyens de liaison (54), à deux chapes oscillantes, sont destinés à être liés uniquement aux deux bras inférieurs (55) de l'attelage arrière (3) d'un tracteur agricole (4).

2. Machine agricole de travail du sol selon la revendication 1, ***caractérisée par le fait que*** chaque dispositif de liaison avant (15 ; 112 ; 130) comporte au moins un bras avant (31, 33 ; 119) guidant ledit élément roulant avant (13 ; 111), et que chaque dispositif de liaison arrière (16 ; 113 ; 131) comporte au moins un bras arrière (23 ; 116) guidant ledit élément roulant arrière (14).

3. Machine agricole de travail du sol selon la revendication 2, ***caracterérisé par le fait que*** chaque bras avant (31, 33) est lié à son extrémité arrière à la poutre support (7) correspondante au moyen d'une articulation (34) d'axe de pivotement au moins sensiblement parallèle à l'axe de roulement dudit élément roulant avant (13) et que chaque bras arrière (23) est lié à son extrémité avant à la poutre support (7) correspondante au moyen d'une articulation (24) d'axe de pivotement au moins sensiblement parallèle à l'axe de roulement dudit élément roulant arrière (14).

4. Machine agricole de travail du sol selon la revendication 2, ***caractérisée par le fait que*** les dispositifs de liaison (112, 113 ; 130, 131) comportent une structure de guidage rigide (122) qui comprend lesdits bras (31, 33, 23 ; 119, 116) et qui est liée à la structure d'attelage (2) au moyen de ladite structure de liaison (44) ; lesdits dispositifs de liaison (112, 113 ; 130, 131) comportant en sus des pièces de guidage (124 ; 132) liant la poutre support (110) à ladite structure de guidage (122), de sorte à autoriser au travail un déplacement en hauteur de la poutre support (110) par rapport à la structure de guidage (122) et aux éléments roulants (13, 14 ; 111, 14).

5. Machine agricole de travail du sol selon la revendication 4, ***caractérisée par le fait que*** les pièces de guidage (124) comportent des montants (125) guidés par des éléments de guidage (126).

6. Machine agricole de travail du sol selon la revendication 5, ***caractérisée par le fait que*** les montants (125) sont fixés à la poutre support (110) et que les éléments de guidage (126) sont liés rigidement à la structure de guidage (122).

7. Machine agricole de travail du sol selon la revendication 4, ***caractérisée par le fait que*** les pièces de guidage (132) comportent deux quadrilatères déformables vers le haut (134) qui s'étendent au moins sensiblement perpendiculairement à la poutre support (110).

8. Machine agricole de travail du sol selon la revendication 7, ***caractérisée par le fait que*** chaque quadrilatère déformable (134) est au moins sensiblement un parallélogramme lié à sa partie frontale à la structure de guidage (122) et à sa partie arrière à la poutre support (110).

9. Machine agricole de travail du sol selon l'une des revendications 1 à 8, ***caractérisée par le fait que*** dispositifs de liaison (15, 16 ; 112, 113 ; 130, 131) de chaque groupe d'outils de travail du sol (5 ; 109 ; 141) comportent au moins un dispositif de réglage de la profondeur de travail (17, 18; 114; 133) autorisant, au travail, un déplacement en hauteur de la poutre support (7 ; 110) par rapport aux éléments roulants (13, 14 ; 111, 14) tout en limitant vers le bas le déplacement de la poutre support (7 ; 110) par rapport auxdits éléments roulants(13, 14 ; 111, 14).

10. Machine agricole de travail du sol selon l'une des revendications 1 à 9, ***caractérisée par le fait qu**'*elle comporte au moins une trémie avec un dispositif de distribution des graines (92), fixée à la structure d'attelage (2) et deux dispositifs d'implantation des graines dans le sol (96), chacun lié à un groupe d'outils de travail du sol (5 ; 109 ; 141).

11. Machine agricole de travail du sol selon la revendication 10, ***caractérisée par le fait que*** chaque dispositif d'implantation des graines dans le sol (96) est lié rigidement au dispositif de liaison arrière (16 ; 113 ; 131) du groupe d'outils de travail du sol (5 ; 109 ; 141) correspondant.

12. Machine agricole de travail du sol selon les revendications 3, 9 et 11, ***caractérisée par le fait que*** chaque dispositif d'implantation (96) est lié au dispositif de liaison arrière (16) au moyen d'une structure réglable en hauteur (97).

13. Machine agricole de travail du sol selon la revendication 12, ***caractérisée par le fait que*** chaque structure réglable en hauteur (97) comporte au moins un organe réglable (101) permettant d'ajuster la position angulaire du dispositif d'implantation (96) par rapport à la surface du sol.

14. Machine agricole de travail du sol selon l'une des revendications 10 à 13, ***caractérisée par le fait qu***'elle comporte deux trémies (93), chacune liée à la structure d'attelage (2), en vue de dessus, au moins sensiblement dans la partie médiane du groupe d'outils de travail du sol (5 ; 109 ; 141) correspondant.

15. Machine agricole de travail du sol selon l'une des revendications 10 à 14, ***caractérisée par le fait que*** l'élément roulant arrière (14) est un rouleau arrière (20), que le dispositif de liaison arrière (16 ; 113 ; 131) comporte deux bras arrière (23 ; 116) entre lesquels est guidé ledit rouleau arrière (20), que le dispositif de liaison arrière (16 ; 113 ; 131) comporte en sus au moins un longeron arrière (26 ; 117) s'étendant entre lesdits bras arrière (23 ; 116) et qu'à ce longeron arrière (26 ; 117) est fixé le dispositifd'implantation (96).

16. Machine agricole de travail du sol selon la revendication 15, ***caractérisée par le fait que*** le dispositif de liaison arrière (16 ; 113 ; 131) comporte, derrière le longeron arrière (26 ; 117), un longeron support (28) s'étendant également entre lesdits bras arrière (23 ; 116), ainsi que des organes rigidifiants (30 ; 118) implantés entre le longeron arrière (26 ; 117) et le longeron support (28).

17. Machine agricole de travail du sol selon l'une des revendications 1 à 16 combinée avec la revendication 4, ***caractérisée par le fait que*** l'élément roulant avant (13 ; 111) est un rouleau (19 ; 115) et que le dispositif de liaison avant (15 ; 112 ; 130) comporte deux bras avant (31 ; 119) entre lesquels est guidé ledit rouleau avant (13 ; 111).

18. Machine agricole de travail du sol selon l'une des revendications 1 à 17, ***caractérisée par le fait qu***'elle comporte encore deux roues (70) implantées chacune derrière un élément roulant arrière correspondant (14) et liées à la structure d'attelage (2) au moyen d'un disposif de guidage correspondant (71), autorisant un pivotement de la roue respective (70) autour d'un axe de pivotement (81) dirigé vers le haut et permettant lorsque cela est souhaité, un déplacement en hauteur de la roue (70) par rapport à ladite structure d'attelage (2).

19. Machine agricole de travail du sol selon la revendication 18, ***caractérisée par le fait que*** chaque dispositif de guidage (71) comporte :
- une partie de guidage (73, 75) fixée de manière réglable à la structure d'attelage (2) suivant une direction dirigée vers l'avant, de sorte à pouvoir rapprocher ou éloigner la roue (70) de la structure d'attelage (2),
- un bras de guidage (76) lié à la partie de guidage (73, 75) au moyen d'une articulation cylindrique (77) d'axe de pivotement au moins sensiblement horizontal et perpendiculaire audit bras de guidage (76),
- un organe de manoeuvre (78) implanté entre la partie de guidage (73, 75) et le bras de guidage (76) et
- un bras de roue (80) guidant la roue (70) et lié au bras de guidage (76) au moyen dudit ce de pivotement (81) dirigé vers le haut.

20. Machine agricole de travail du sol selon l'une des revendications 1 à 19, ***caractérisée par le*** **fait *qu***'elle comporte des organes de guidage (64) implantés entre chaque groupe d'outils de travail du sol (5 ; 109 ; 141) et la structure d'attelage (2), de sorte à encaisser au moins une partie du moment des efforts produits par l'action du sol sur le groupe d'outils de travail du sol (5 ; 109 ; 141) par rapport à ladite structure de liaison (44) lors de l'avancement de la machine agricole de travail du sol (1 ; 108 ; 129) au travail.

21. Machine agricole de travail du sol selon la revendication 20, ***caractérisée par le fait que*** certains au moins des organes de guidage (64) sont implantés, vus de dessus, au moins sensiblement entre les deux structures de liaison (44).

22. Machine agricole de travail du sol selon la revendication 20 ou 21, ***caractérisée par le fait que*** les organes de guidage (64) comportent au moins un montant de guidage (66) destiné à coulisser entre deux butées (67, 68) respectives décalées l'une par rapport à l'autre suivant la direction de travail (6).

23. Machine agricole de travail du sol selon la revendication 22, ***caractérisée par le fait que*** chaque montant de guidage (66) est fixé à son extrémité inférieure à un groupe d'outils de travail du sol (5 ; 109 ; 141) et que les deux butées (67, 68) correspondantes sont solidaires de la structure d'attelage (2).

24. Machine agricole de travail du sol selon l'une des revendications 1 à 23, ***caractérisée par le fait que*** la structure d'attelage (2) comporte au moins une poutre avant (49) et au moins une poutre arrière (50) fixées entre elles auxquelles sont liés les groupes d'outils de travail du sol (5 ; 109 ; 141) au moyen des structures de liaison (44).

25. Machine agricole de travail du sol selon la revendication 24, ***caractérisée par le fait que*** la structure d'attelage (2) comporte en sus deux poutrelles (47), chacune fixée entre la poutre avant (49) et la poutre arrière (50) dans le voisinage de la structure de liaison correspondante, ainsi qu'au moins une poutre supérieure (52) fixée à la poutre avant (49) et à la poutre arrière (50) et implantée au-dessus de ladite poutre avant (49).

26. Machine agricole de travail du sol selon l'une des revendications 1 à 25, ***caractérisée par le fait que*** c'est une herse rotative (1 ; 108 ; 129).

## Claims

1. Agricultural soil-working machine (1 ; 108 ; 129) comprising, on the one hand, a hitching structure (2) equipped with means (54) of connection to the back of an agricultural tractor (4) in such a way that the agricultural machine is, in particular, capable of pivoting about an axis directed at right angles to the direction of forward travel (6) during work and about an axis directed in the direction of forward travel (6) during work and, on the other hand, two groups (5; 109; 141) of soil-working implements (9) extending transversely in the continuation of one another and being at least substantially contiguous, the said groups (5; 109; 141) of soil-working implements (9) each being connected to the hitching structure (2) by means of a cylindrical articulation (45) allowing the said group (5; 109; 141) of soil-working implements (9) to pivot about a forward-directed geometric axis, each of the said groups (5; 109; 141) of soil-working implements (9) comprising:
- a support beam (7; 110) with a box (8) under which the soil-working implements (9) are arranged and which is fitted with a driving casing (11) for driving the said soil-working implements (9);
- a front rolling element (13; 111) situated in front of the support beam (7; 110) and connected to the latter by means of a front connecting device (15; 112; 130), and
- a rear rolling element (14) situated behind the said support beam (7; 110) and connected to the latter by means of a rear connecting device (16; 113; 131),
the said agricultural machine further comprising two wheels (70), each located behind one corresponding rear rolling element (14) and each one connected to the hitching structure (2) by means of a guide device (71) which, when desired, allows the wheel (70) to move heightwise with respect to the hitching structure (2),
***characterized in*** that the cylindrical articulation (45) is located at least substantially in the central part of the box (8) and that the connection means (54), with two swinging yokes, are intended to be connected only to the two lower links (55) of the rear hitch (3) of an agricultural tractor (4).

2. Agricultural soil-working machine according to Claim 1, ***characterized in*** that each front connecting device (15; 112; 130) comprises at least one front arm (31, 33; 119) guiding the said front rolling element (13; 111) and that each rear connecting device (16; 113; 131) comprises at least one rear arm (23; 116) guiding the said rear rolling element (14).

3. Agricultural soil-working machine according to Claim 2, ***characterized in*** that each front arm (31, 33) is connected at its rear end to the corresponding support beam (7) by means of an articulation (34) whose axis of pivoting is at least substantially parallel to the axis of rolling of the said front rolling element (13) and that each rear arm (23) is connected at its front end to the corresponding support beam (7) by means of an articulation (24) whose axis of pivoting is at least substantially parallel to the axis of rolling of the said rear rolling element (14).

4. Agricultural soil-working machine according to Claim 2, ***characterized in*** that the connecting devices (112, 113; 130, 131) comprise a rigid guide structure (122) which comprises the said arms (31, 33, 23; 119, 116) and which is connected to the hitching structure (2) by means of the said connecting structure (44); the said connecting devices (112, 113; 130; 131) additionally comprising guide pieces (124; 132) connecting the support beam (110) to the said guide structure (122) so as to allow a heightwise movement of the support beam (110) with respect to the guide structure (122) and with respect to the rolling elements (13, 14; 111, 114), during work.

5. Agricultural soil-working machine according to Claim 4, ***characterized in*** that the guide pieces (124) comprise uprights (125) guided by guide elements (126).

6. Agricultural soil-working machine according to Claim 5, ***characterized in*** that the uprights (125) are fixed to the support beam (110) and that the guide elements (126) are rigidly connected to the guide structure (122).

7. Agricultural soil-working machine according to Claim 4, ***characterized in*** that the guide pieces (132) comprise two upwardly deformable quadrilaterals (134) which run at least substantially at right angles to the support beam (110).

8. Agricultural soil-working machine according to Claim 7, ***characterized in*** that each deformable quadrilateral (134) is at least substantially a parallelogram connected, at its front part, to the guide structure (122) and, at its rear part, to the support beam (110).

9. Agricultural soil-working machine according to one of Claims 1 to 8, ***characterized in*** that the connecting devices (15, 16; 112, 113; 130, 131) of each group of soil-working implements (5; 109; 141) comprise at least one device (17, 18; 114; 133) for adjusting the working depth, allowing an upward movement of the support beam (7; 110) with respect to the rolling elements (13, 14; 111, 14) during work while at the same time limiting the downwards movement of the support beam (7; 110) with respect to the said rolling elements (13, 14; 111, 14).

10. Agricultural soil-working machine according to one of Claims 1 to 9, ***characterized in*** that it comprises at least one hopper with a seed dispensing device (92), this hopper being fixed to the hitching structure (2), and two devices (96) for planting seeds in the ground, each device connected to a group of soil-working implements (5; 109; 141).

11. Agricultural soil-working machine according to Claim 10, ***characterized in*** that each device (96) for planting seeds in the ground is rigidly connected to the rear connecting device (16; 113; 131) of the corresponding group of soil-working implements (5; 109; 141).

12. Agricultural soil-working machine according to Claims 3, 9 and 11, ***characterized in*** that each planting device (96) is connected to the rear connecting device (16) by means of a height-adjustable structure (97).

13. Agricultural soil-working machine according to Claim 12, ***characterized in*** that each height-adjustable structure (97) has at least one adjustable member (101) allowing the angular position of the planting device (96) with respect to the surface of the soil to be altered.

14. Agricultural soil-working machine according to one of Claims 10 to 13, ***characterized in*** that it comprises two hoppers (93), each one connected to the hitching structure (2) and, when viewed from above, at least substantially in the central part of the corresponding group of soil-working implements (5; 109; 141).

15. Agricultural soil-working machine according to one of Claims 10 to 14, ***characterized in*** that the rear rolling element (14) is a rear roller (20), that the rear connecting device (16; 113; 131) comprises two rear arms (23; 116) between which the said rear roller (20) is guided, that the rear connecting device (16; 113; 131) additionally comprises at least one rear stringer (26; 117) running between the said rear arms (23; 116) and that the planting device (96) is fixed to this rear stringer (26; 117).

16. Agricultural soil-working machine according to Claim 15, ***characterized in*** that the rear connecting device (16; 113; 131) comprises, behind the rear stringer (26; 117), a support stringer (28) also running between the said rear arms (23; 116), and stiffeners (30; 118) located between the rear stringer (26; 117) and the support stringer (28).

17. Agricultural soil-working machine according to one of Claims 1 to 16 combined with Claim 4, ***characterized in*** that the front rolling element (13; 111) is a roller (19; 115) and that the front connecting device (15; 112; 130) comprises two front arms (31; 119) between which the said front roller (13; 111) is guided.

18. Agricultural soil-working machine according to one of Claims 1 to 17, ***characterized in*** that it further comprises two wheels (70), each one located behind a corresponding rear rolling element (14) and being connected to the hitching structure (2) by means of a corresponding guide device (71) allowing the respective wheel (70) to pivot about an upwards-directed axis of pivoting (81) and, when desired, allows the wheel (70) to move heightwise with respect to the said hitching structure (2).

19. Agricultural soil-working machine according to Claim 18, ***characterized in*** that each guide device (71) comprises:
- a guide part (73, 75), fixed adjustably to the hitching structure (2) in a forwards-facing direction, so that the wheel (70) can be brought closer to, or further away from, the hitching structure (2),
- a guide arm (76), connected to the guide part (73, 75) by means of a cylindrical articulation (77), the axis of pivoting of which is at least substantially horizontal and perpendicular to the said guide arm (76),
- an operating member (78), installed between the guide part (73, 75) and the guide arm (76), and
- a wheel arm (80), guiding the wheel (70) and connected to the guide arm (76) by means of the said upwards-facing axis of pivoting (81).

20. Agricultural soil-working machine according to one of Claims 1 to 19, ***characterized in*** that it comprises guide members (64) situated between each group of soil-working implements (5; 109; 141) and the hitching structure (2), to take up at least part of the moment of the forces which are produced by the action of the soil on the group of soil-working implements (5; 109; 141) with respect to the said connecting structure (44) as the agricultural soil-working machine (1; 108; 129) progresses forwards during work.

21. Agricultural soil-working machine according to Claim 20, ***characterized in*** that at least some of the guide members (64) are situated, when viewed from above, at least substantially between the two connecting structures (44).

22. Agricultural soil-working machine according to Claim 20 or 21, ***characterized in*** that the guide members (64) comprise at least one guide upright (66) intended to slide between two respective stops (67, 68) which are offset from one another in the direction of work (6).

23. Agricultural soil-working machine according to Claim 22, ***characterized in*** that each guide upright (66) is fixed at its lower end to a group of soil-working implements (5; 109; 141) and that the two corresponding stops (67, 68) are secured to the hitching structure (2).

24. Agricultural soil-working machine according to one of Claims 1 to 23, ***characterized in*** that the hitching structure (2) comprises at least one front beam (49) and at least one rear beam (50) which are fixed together and to which the groups of soil-working implements (5; 109; 141) are connected by means of the connecting structures (44).

25. Agricultural soil-working machine according to Claim 24, ***characterized in*** that the hitching structure (2) additionally comprises two girders (47), each fixed between the front beam (49) and the rear beam (50) in the region of the corresponding connecting structure, and at least one upper beam (52) fixed to the front beam (49) and to the rear beam (50) and situated above the said front beam (49).

26. Agricultural soil-working machine according to one of Claims 1 to 25, ***characterized in*** that it is a rotary harrow (1; 108; 129).

## Patentansprüche

1. Landwirtschaftliche Bodenbearbeitungsmaschine (1; 108; 129), die einerseits eine Kupplungsvorrichtung (2), die mit Mitteln (54) für die derartige Verbindung mit dem hinteren Teil eines Ackerschleppers (4) versehen ist, daß die landwirtschaftliche Maschine insbesondere um eine senkrecht zur Fahrtrichtung (6) im Betrieb ausgerichtete Achse und um eine in Fahrtrichtung (6) im Betrieb ausgerichtete Achse schwenken kann, und andererseits zwei Gruppen (5; 109; 141) von Bodenbearbeitungswerkzeugen (9) aufweist, die sich in Querrichtung in ihrer gegenseitigen Verlängerung erstrecken und zumindest im wesentlichen aneinander anstoßen, wobei die Gruppen (5; 109; 141) von Bodenbearbeitungswerkzeugen jeweils mittels eines zylindrischen Gelenks (45) mit der Kupplungsvorrichtung (2) verbunden sind, das das Schwenken der Gruppe (5; 109; 141) von Bodenbearbeitungswerkzeugen (9) um eine nach vorne ausgerichtete geometrische Achse gestattet, wobei jede der Gruppen (5; 109; 141) von Bodenbearbeitungswerkzeugen (9) folgendes umfaßt:
- einen Stützträger (7; 110) mit einem Gehäuse (8), unter dem die Bodenbearbeitungswerkzeuge (9) angeordnet sind, der mit einem Antriebskasten (11) zum Antrieb der Bodenbearbeitungswerkzeuge (9) versehen ist;
- ein vorderes rollendes Element (13; 111), das vor dem Stützträger (7; 110) angebracht und mittels einer vorderen Verbindungsvorrichtung (15; 112; 130) damit verbunden ist, und
- ein hinteres rollendes Element (14), das hinter dem Stützträger (7; 110) angebracht und mittels einer hinteren Verbindungsvorrichtung (16; 113; 131) damit verbunden ist,
wobei die landwirtschaftliche Maschine noch zwei Räder (70) aufweist, die jeweils hinter einem entsprechenden hinteren rollenden Element (14) angebracht und jeweils mittels einer Führungsvorrichtung (71), die, falls gewünscht, eine Verschiebung des Rads (70) bezuglich der Kupplungsvorrichtung (2) in der Höhe gestattet, mit der Kupplungsvorrichtung (2) verbunden sind,
***dadurch gekennzeichnet*****,** daß sich das zylindrische Gelenk (45) zumindest im wesentlichen in dem mittleren Teil des Gehäuses (8) befindet und die Verbindungsmittel (54) mit zwei Schwinggabeln nur mit den beiden unteren Armen (55) der hinteren Kupplungseinrichtung (3) eines Ackerschleppers (4) verbunden werden sollen.

2. Landwirtschaftliche Bodenbearbeitungsmaschine nach Anspruch 1, ***dadurch gekennzeichnet*****,** daß jede vordere Verbindungsvorrichtung (15; 112; 130) mindestens einen vorderen Arm (31, 33; 119) aufweist, der das vordere rollende Element (13; 111) führt, und daß jede hintere Verbindungsvorrichtung (16; 113; 131) mindestens einen hinteren Arm (23; 116) aufweist, der das hintere rollende Element (14) führt.

3. Landwirtschaftliche Bodenbearbeitungsmaschine nach Anspruch 2, ***dadurch gekennzeichnet*****,** daß jeder vordere Arm (31, 33) an seinem hinteren Ende mittels eines Gelenks (34) mit einer zumindest im wesentlichen parallel zur Rollachse des vorderen rollenden Elements (13) verlaufenden Schwenkachse mit dem entsprechenden Stützträger (7) verbunden ist und daß jeder hintere Arm (23) an seinem vorderen Ende mittels eines Gelenks (24) mit einer zumindest im wesentlichen parallel zur Rollachse des hinteren rollenden Elements (14) verlaufenden Schwenkachse mit dem entsprechenden Stützträger (7) verbunden ist.

4. Landwirtschaftliche Bodenbearbeitungsmaschine nach Anspruch 2, ***dadurch gekennzeichnet*****,** daß die Verbindungsvorrichtungen (112, 113; 130, 131) eine starre Führungskonstruktion (122) aufweisen, die die Arme (31, 33, 23; 119, 116) umfaßt und die mittels der Verbindungskonstruktion (44) mit der Kupplungsvorrichtung (2) verbunden ist; die Verbindungsvorrichtungen (112, 113; 130, 131) des weiteren Führungsteile (124; 132) aufweisen, die den Stützträger (110) so mit der Führungskonstruktion (122) verbinden, daß im Betrieb ein Verschieben des Stützträgers (110) in der Höhe bezuglich der Führungskonstruktion (122) und der rollenden Elemente (13, 14; 111, 14) gestattet wird.

5. Landwirtschaftliche Bodenbearbeitungsmaschine nach Anspruch 4, ***dadurch gekennzeichnet*****,** daß die Führungsteile (124) Ständer (125) aufweisen, die durch Führungselemente (126) geführt werden.

6. Landwirtschaftliche Bodenbearbeitungsmaschine nach Anspruch 5, ***dadurch gekennzeichnet*****,** daß die Ständer (125) an dem Stützträger (110) befestigt sind und daß die Führungselemente (126) mit der Führungskonstruktion (122) starr verbunden sind.

7. Landwirtschaftliche Bodenbearbeitungsmaschine nach Anspruch 4, ***dadurch gekennzeichnet*****,** daß die Führungsteile (132) zwei nach oben verformbare Vierecke (134) aufweisen, die sich zumindest im wesentlichen senkrecht zu dem Stützträger (110) erstrecken.

8. Landwirtschaftliche Bodenbearbeitungsmaschine nach Anspruch 7, ***dadurch gekennzeichnet*****,** daß jedes verformbare Viereck (134) zumindest im wesentlichen ein Parallelogramm ist, das an seinem vorderen Teil mit der Führungskonstruktion (122) und an seinem hinteren Teil mit dem Stützträger (110) verbunden ist.

9. Landwirtschaftliche Bodenbearbeitungsmaschine nach einem der Ansprüche 1 bis 8, ***dadurch gekennzeichnet*****,** daß die Verbindungsvorrichtungen (15, 16; 112, 113; 130, 131) jeder Gruppe von Bodenbearbeitungswerkzeugen (5; 109; 141) mindestens eine Vorrichtung (17, 18; 114; 133) zur Einstellung der Arbeitstiefe aufweisen, die im Betrieb eine Verschiebung des Stützträgers (7; 110) bezüglich der rollenden Elemente (13, 14; 111, 14) in der Höhe gestattet, wobei die Verschiebung des Stützträgers (7; 110) bezüglich der rollenden Elemente (13, 14; 111, 14) nach unten begrenzt wird.

10. Landwirtschaftliche Bodenbearbeitungsmaschine nach einem der Ansprüche 1 bis 9, ***dadurch gekennzeichnet*****,** daß sie mindestens einen Saatgutbehälter mit einer Vorrichtung (92) zur Verteilung der Samen, der an der Kupplungsvorrichtung (2) befestigt ist, und zwei Vorrichtungen (96) zur Einpflanzung der Samen in den Boden, die jeweils mit einer Gruppe von Bodenbearbeitungswerkzeugen (5; 109; 141) verbunden sind, aufweist.

11. Landwirtschaftliche Bodenbearbeitungsmaschine nach Anspruch 10, ***dadurch gekennzeichnet*****,** daß jede Vorrichtung (96) zur Einpflanzung der Samen in den Boden mit der hinteren Verbindungsvorrichtung (16; 113; 131) der entsprechenden Gruppe von Bodenbearbeitungswerkzeugen (5; 109; 141) starr verbunden ist.

12. Landwirtschaftliche Bodenbearbeitungsmaschine nach den Ansprüchen 3, 9 und 11, ***dadurch gekennzeichne*****t,** daß jede Einpflanzungsvorrichtung (96) mittels einer in der Höhe verstellbaren Konstruktion (97) mit der hinteren Verbindungsvorrichtung (16) verbunden ist.

13. Landwirtschaftliche Bodenbearbeitungsmaschine nach Anspruch 12, ***dadurch gekennzeichnet*****,** daß jede in der Höhe verstellbare Konstruktion (97) mindestens ein verstellbares Glied (101) aufweist, das die Einstellung der Winkelposition der Einpflanzungsvorrichtung (96) bezüglich der Bodenoberfläche gestattet.

14. Landwirtschaftliche Bodenbearbeitungsmaschine nach einem der Ansprüche 10 bis 13, ***dadurch gekennzeichnet*****,** daß sie zwei Saatgutbehälter (93) aufweist, die jeweils, von oben gesehen, zumindest im wesentlichen im mittleren Teil der entsprechenden Gruppe von Bodenbearbeitungswerkzeugen (5; 109; 141) mit der Kupplungsvorrichtung (2) verbunden sind.

15. Landwirtschaftliche Bodenbearbeitungsmaschine nach einem der Ansprüche 10 bis 14, ***dadurch gekennzeichnet*****,** daß es sich bei dem hinteren rollenden Element (14) um eine hintere Walze (20) handelt, daß die hintere Verbindungsvorrichtung (16; 113; 131) zwei hintere Arme (23; 116) aufweist, zwischen denen die hintere Walze (20) geführt wird, daß die hintere Verbindungsvorrichtung (16; 113; 131) des weiteren mindestens einen hinteren Längsträger (26; 117) aufweist, der sich zwischen den hinteren Armen (23; 116) erstreckt, und daß an diesem hinteren Längsträger (26; 117) die Einpflanzungsvorrichtung (96) befestigt ist.

16. Landwirtschaftliche Bodenbearbeitungsmaschine nach Anspruch 15, ***dadurch gekennzeichnet*****,** daß die hintere Verbindungsvorrichtung (16; 113; 131) hinter dem hinteren Längsträger (26; 117) einen Stützlängsträger (28), der sich ebenfalls zwischen den hinteren Armen (23; 116) erstreckt, sowie Versteifungsglieder (30; 118) aufweist, die zwischen dem hinteren Längsträger (26; 117) und dem Stützlängsträger (28) angebracht sind.

17. Landwirtschaftliche Bodenbearbeitungsmaschine nach einem der Ansprüche 1 bis 16 in Kombination mit Anspruch 4, ***dadurch gekennzeichnet*****,** daß es sich bei dem vorderen rollenden Element (13; 111) um eine Walze (19; 115) handelt und daß die vordere Verbindungsvorrichtung (15; 112; 130) zwei vordere Arme (31; 119) aufweist, zwischen denen die vordere Walze (13; 111) geführt wird.

18. Landwirtschaftliche Bodenbearbeitungsmaschine nach einem der Ansprüche 1 bis 17, ***dadurch gekennzeichnet*****,** daß sie des weiteren zwei Räder (70) aufweist, die jeweils hinter einem entsprechenden hinteren rollenden Element (14) angebracht und mittels einer entsprechenden Führungsvorrichtung (71) mit der Kupplungsvorrichtung (2) verbunden sind, wobei die Führungsvorrichtung (71) ein Schwenken des jeweiligen Rads (70) um eine nach oben ausgerichtete Schwenkachse (81) und, falls gewünscht, eine Verschiebung des Rads (70) bezüglich der Kupplungsvorrichtung (2) in der Höhe gestattet.

19. Landwirtschaftliche Bodenbearbeitungsmaschine nach Anspruch 18, ***dadurch gekennzeichnet*****,** daß jede Führungsvorrichtung (71) folgendes umfaßt:
- einen Führungsteil (73, 75), der an der Kupplungsvorrichtung (2) gemäß einer nach vorne verlaufenden Richtung verstellbar so befestigt ist, daß er das Rad (70) der Kupplungsvorrichtung (2) annähern oder es von ihr wegführen kann,
- einen Führungsarm (76), der mittels eines zylindrischen Gelenks (77) mit einer zumindest im wesentlichen horizontal und senkrecht zum Führungsarm (76) verlaufenden Schwenkachse mit dem Führungsteil (73, 75) verbunden ist,
- ein Manövrierteil (78), das zwischen dem Führungsteil (73, 75) und dem Führungsarm (76) angebracht ist, und
- einen Radarm (80), der das Rad (70) führt und mittels der nach oben ausgerichteten Schwenkachse (81) mit dem Führungsarm (76) verbunden ist.

20. Landwirtschaftliche Bodenbearbeitungsmaschine nach einem der Ansprüche 1 bis 19, ***dadurch gekennzeichnet*****,** daß sie Führungsglieder (64) aufweist, die zwischen jeder Gruppe von Bodenbearbeitungswerkzeugen (5; 109; 141) und der Kupplungsvorrichtung (2) so angebracht sind, daß sie mindestens einen Teil des Moments der Kräfte aufnehmen, die durch Wirkung des Bodens auf die Gruppe von Bodenbearbeitungswerkzeugen (5; 109; 141) bezüglich der Verbindungskonstruktion (44) beim Fortbewegen der landwirtschaftlichen Bodenbearbeitungsmaschine (1; 108; 129) im Betrieb erzeugt werden.

21. Landwirtschaftliche Bodenbearbeitungsmaschine nach Anspruch 20, ***dadurch gekennzeichnet*****,** daß mindestens einige der Führungsglieder (64), von oben gesehen, zumindest im wesentlichen zwischen den beiden Verbindungskonstruktionen (44) angebracht sind.

22. Landwirtschaftliche Bodenbearbeitungsmaschine nach Anspruch 20 oder 21, ***dadurch gekennzeichnet*****,** daß die Führungsglieder (64) mindestens einen Führungsständer (66) aufweisen, der zwischen zwei jeweiligen Anschlägen (67, 68) gleiten soll, die in Arbeitsrichtung (6) zueinander versetzt sind.

23. Landwirtschaftliche Bodenbearbeitungsmaschine nach Anspruch 22, ***dadurch gekennzeichnet*****,** daß jeder Führungsständer (66) an seinem unteren Ende an einer Gruppe von Bodenbearbeitungswerkzeugen (5; 109; 141) befestigt ist und daß die beiden entsprechenden Anschläge (67, 68) fest mit der Kupplungsvorrichtung (2) verbunden sind.

24. Landwirtschaftliche Bodenbearbeitungsmaschine nach einem der Ansprüche 1 bis 23, ***dadurch gekennzeichnet***, daß die Kupplungsvorrichtung (2) mindestens einen vorderen Träger (49) und mindestens einen hinteren Träger (50) aufweist, die aneinander befestigt sind und mit denen die Gruppen von Bodenbearbeitungswerkzeugen (5; 109; 141) mittels der Verbindungskonstruktionen (44) verbunden sind.

25. Landwirtschaftliche Bodenbearbeitungsmaschine nach Anspruch 24, ***dadurch gekennzeichnet*****,** daß die Kupplungsvorrichtung (2) des weiteren zwei kleine Träger (47), die jeweils zwischen dem vorderen Träger (49) und dem hinteren Träger (50) in der Nähe der entsprechenden Verbindungskonstruktion befestigt sind, sowie mindestens einen oberen Träger (52), der an dem vorderen Träger (49) und dem hinteren Träger (50) befestigt und über dem vorderen Träger (49) angebracht ist, aufweist.

26. Landwirtschaftliche Bodenbearbeitungsmaschine nach einem der Ansprüche 1 bis 25, ***dadurch gekennzeichnet*****,** daß es sich dabei um eine Kreiselegge (1; 108; 129) handelt.
